# EUROPEAN PATENT APPLICATION

(11) **EP 4 804 422 A1**
(43) Date of publication of application: **09.09.2026**
(21) Application number: 24896315.9
(22) Date of filing: 18.11.2024
(51) Int. Cl.: H04B 7/0456, H04B 7/06

(54) **COMMUNICATION METHOD AND DEVICE**

(30) Priority: 28.11.2023 CN 202311615692
(71) Applicant: Huawei Technologies Co., Ltd., Shenzhen, Guangdong 518129 (CN)
(72) Inventor: WANG, Lei, Shenzhen, Guangdong 518129 (CN); BI, Xiaoyan, Shenzhen, Guangdong 518129 (CN)
(74) Representative: Grünecker Patent- und Rechtsanwälte PartG mbB
(86) International application number: PCT/CN2024/132740
(87) International publication number: WO 2025/113224

(57) **Abstract**

A communication method and apparatus are provided, and can be applied to the field of communication technologies. The method includes: After determining K base vectors corresponding to precoding information, a first communication apparatus may indicate, to a second communication apparatus based on first indication information, an update amount of an index value corresponding to the K base vectors relative to an index value corresponding to K reference base vectors. Therefore, after receiving the first indication information, the second communication apparatus may determine the K base vectors based on the first indication information and the K reference base vectors, and send a precoded signal based on the K base vectors. According to the method, signaling overheads of the first indication information can be reduced.

## Description

This application claims priority to Chinese Patent Application No. 202311615692.6, filed with the China National Intellectual Property Administration on November 28, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system equipped with a plurality of antennas, signals from a plurality of transmit antennas are superimposed at any receive antenna. As a result, a signal transmission method used at a transmitting side affects overall system performance, and a signal recovery process at a receiving side is usually complex.

According to precoding (precoding) technologies, a system capacity can be increased, and complexity of a receiver in eliminating inter-channel interference can be reduced. For example, the transmitting side may send a precoded signal, thereby reducing complexity at the receiving side. The transmitting side typically uses a precoding matrix P when performing precoding on signals. For example, the transmitting side may obtain the precoding matrix P from the receiving side. For example, the receiving side may indicate, to the transmitting side, an index value of each column in the precoding matrix P based on a predefined set.

However, signaling overheads of the foregoing method are still large.

### SUMMARY

Embodiments of this application provide a communication method and apparatus, to reduce signaling overheads.

According to a first aspect, an embodiment of this application provides a communication method, where the method is applied to a first communication apparatus, the first communication apparatus may be a device, or may be a chip, a functional module, or the like that can be disposed in a device, and the method includes:
determining K base vectors corresponding to precoding information, where K is a positive integer; and sending first indication information, where the first indication information indicates an update amount of an index value corresponding to the K base vectors relative to an index value corresponding to K reference base vectors.

In this embodiment of this application, the first communication apparatus may indicate, to a second communication apparatus based on the first indication information, the update amount of the index value corresponding to the K base vectors relative to the index value corresponding to the K reference base vectors. Because a value range of the update amount is far less than a value range of the index value corresponding to the K base vectors, the method provided in this embodiment of this application effectively reduces signaling overheads of the first indication information.

In a possible implementation, the index value corresponding to the K base vectors is an index value of each of the K base vectors, the K reference base vectors are an index value of each of the K reference base vectors, and the update amount includes an update amount of the index value of each of the K base vectors relative to an index value of a corresponding reference base vector.

In a possible implementation, the first indication information includes the update amount of the index value of each of the K base vectors relative to the index value of the corresponding reference base vector; or the first indication information includes an index value of an update amount group, and the update amount group is determined by using K update amounts.

In this embodiment of this application, the first communication apparatus may explicitly indicate the K update amounts to the second communication apparatus based on the K update amounts included in the first indication information, so that operation complexity of restoring the K base vectors by the second communication apparatus is reduced. Alternatively, in this embodiment of this application, the first communication apparatus indicates the K base vectors to the second indication information based on the index value indicated by the first indication information, so that signaling overheads can be further reduced.

In a possible implementation, the K base vectors are different from each other.

In a possible implementation, a first update amount group corresponds to K first base vectors, a second update amount group corresponds to K second base vectors, and the K first base vectors and the K second base vectors are different in at least one base vector, where the K base vectors are the K first base vectors or the K second base vectors, and the update amount group is the first update amount group or the second update amount group.

In this embodiment of this application, the K first base vectors and the K second base vectors are different in at least one base vector, so that a quantity of update amount groups can be reduced as much as possible, index values are reduced as much as possible, and signaling overheads are reduced.

In a possible implementation, the index value corresponding to the K base vectors is an index value of a base vector group to which the K base vectors belong, the index value corresponding to the K reference base vectors is an index value of a base vector group to which the K reference base vectors belong, and the update amount includes an update amount of the index value of the base vector group to which the K base vectors belong relative to the index value of the base vector group to which the K reference base vectors belong.

In a possible implementation, the K base vectors are included in any one of the following sets: a space domain base vector set, a frequency domain base vector set, or a time domain base vector set.

In a possible implementation, the method further includes: sending second indication information, where the second indication information indicates an index value corresponding to an update coefficient, and the update coefficient is a coefficient, among coefficients corresponding to the precoding information, that has been updated relative to a reference coefficient.

In a possible implementation, the second indication information includes value indication information, and the value indication information indicates an update amount of the index value corresponding to the update coefficient relative to an index value corresponding to the reference coefficient.

In a possible implementation, a value range, of the index value corresponding to the update coefficient, indicated by the value indication information is determined by using the index value corresponding to the reference coefficient.

In a possible implementation, the second indication information includes location indication information, and the location indication information indicates a location of the update coefficient in the coefficients.

In a possible implementation, the update coefficient includes a variable zero coefficient or a variable non-zero coefficient.

According to a second aspect, an embodiment of this application provides a communication method, where the method is applied to a first communication apparatus, the first communication apparatus may be a device, or may be a chip, a functional module, or the like that can be disposed in a device, and the method includes:
determining coefficients corresponding to precoding information; and sending second indication information, where the second indication information indicates an index value corresponding to an update coefficient, and the update coefficient is a coefficient, among the coefficients, that has been updated relative to a reference coefficient.

In a possible implementation, the second indication information includes value indication information, and the value indication information indicates an update amount of the index value corresponding to the update coefficient relative to an index value corresponding to the reference coefficient.

In this embodiment of this application, the first communication apparatus indicates, to the second communication apparatus based on the second indication information, the update amount of the index value corresponding to the update coefficient relative to the index value corresponding to the reference coefficient. Because a value range of the update amount is far less than a value range of the index value corresponding to the update coefficient, the method provided in this embodiment of this application effectively reduces indication overheads of the second indication information.

In a possible implementation, a value range, of the index value corresponding to the update coefficient, indicated by the value indication information is determined by using the index value corresponding to the reference coefficient.

In a possible implementation, the second indication information includes location indication information, and the location indication information indicates a location of the update coefficient in the coefficients.

In a possible implementation, the update coefficient includes a variable zero coefficient or a variable non-zero coefficient.

According to a third aspect, an embodiment of this application provides a communication method, where the method is applied to a second communication apparatus, the second communication apparatus may be a device, or may be a chip, a functional module, or the like that can be disposed in a device, and the method includes:
receiving first indication information, where the first indication information indicates an update amount of an index value corresponding to K base vectors relative to an index value corresponding to K reference base vectors; and determining the K base vectors based on the first indication information and the K reference base vectors.

In a possible implementation, the index value corresponding to the K base vectors is an index value of each of the K base vectors, the K reference base vectors are an index value of each of the K reference base vectors, and the update amount includes an update amount of the index value of each of the K base vectors relative to an index value of a corresponding reference base vector.

In a possible implementation, the first indication information includes the update amount of the index value of each of the K base vectors relative to the index value of the corresponding reference base vector; or the first indication information includes an index value of an update amount group, and the update amount group is determined by using K update amounts.

In a possible implementation, the K base vectors are different from each other.

In a possible implementation, a first update amount group corresponds to K first base vectors, a second update amount group corresponds to K second base vectors, and the K first base vectors and the K second base vectors are different in at least one base vector, where the K base vectors are the K first base vectors or the K second base vectors, and the update amount group is the first update amount group or the second update amount group.

In a possible implementation, the index value corresponding to the K base vectors is an index value of a base vector group to which the K base vectors belong, the index value corresponding to the K reference base vectors is an index value of a base vector group to which the K reference base vectors belong, and the update amount includes an update amount of the index value of the base vector group to which the K base vectors belong relative to the index value of the base vector group to which the K reference base vectors belong.

In a possible implementation, the K base vectors are included in any one of the following sets: a space domain base vector set, a frequency domain base vector set, or a time domain base vector set.

In a possible implementation, the method further includes: receiving second indication information, where the second indication information indicates an index value corresponding to an update coefficient, and the update coefficient is a coefficient, among coefficients corresponding to the precoding information, that has been updated relative to a reference coefficient.

In a possible implementation, the second indication information includes value indication information, and the value indication information indicates an update amount of the index value corresponding to the update coefficient relative to an index value corresponding to the reference coefficient.

In a possible implementation, a value range, of the index value corresponding to the update coefficient, indicated by the value indication information is determined by using the index value corresponding to the reference coefficient.

In a possible implementation, the second indication information includes location indication information, and the location indication information indicates a location of the update coefficient in the coefficients.

In a possible implementation, the update coefficient includes a variable zero coefficient or a variable non-zero coefficient.

According to a fourth aspect, an embodiment of this application provides a communication method, where the method is applied to a second communication apparatus, the second communication apparatus may be a device, or may be a chip, a functional module, or the like that can be disposed in a device, and the method includes:
receiving second indication information, where the second indication information indicates an index value corresponding to an update coefficient, and the update coefficient is a coefficient, among coefficients corresponding to precoding information, that has been updated relative to a reference coefficient; and determining the coefficients based on the second indication information and the reference coefficient.

In a possible implementation, the second indication information includes value indication information, and the value indication information indicates an update amount of the index value corresponding to the update coefficient relative to an index value corresponding to the reference coefficient.

In a possible implementation, a value range, of the index value corresponding to the update coefficient, indicated by the value indication information is determined by using the index value corresponding to the reference coefficient.

In a possible implementation, the second indication information includes location indication information, and the location indication information indicates a location of the update coefficient in the coefficients.

In a possible implementation, the update coefficient includes a variable zero coefficient or a variable non-zero coefficient.

According to a fifth aspect, an embodiment of this application provides a communication method, where the method is applied to a first communication apparatus, the first communication apparatus may be a device, or may be a chip, a functional module, or the like that can be disposed in a device, and the method includes:
determining K base vectors corresponding to precoding information, where K is a positive integer; and sending first indication information, where the first indication information indicates an index value, and the index value is determined based on the K base vectors and K reference base vectors.

In this embodiment of this application, the index value indicated by the first indication information may be directly determined by the first communication apparatus based on the K reference base vectors and the K base vectors, so that the first communication apparatus may not need to prestore a correspondence between an index value of an update amount group and the update amount group, to save storage space of the first communication apparatus.

In a possible implementation, the method further includes: determining the index value based on the K reference base vectors and the K base vectors.

In a possible implementation, the determining the index value based on the K reference base vectors and the K base vectors includes: determining a set Sₖ corresponding to a k^{th} reference base vector in the K reference base vectors, where the set Sₖ represents a value range of an index value of a k^{th} base vector corresponding to the k^{th} reference base vector, the index value of the k^{th} base vector is included in the set Sₖ, and k=0, 1, ..., K-1; and determining the index value of the update amount group based on K sets that correspond to the K reference base vectors, and the K base vectors.

In this embodiment of this application, the index value can be quickly determined in the foregoing method, and the first communication apparatus may not need to prestore the correspondence between the index value of the update amount group and the update amount group, to save the storage space of the first communication apparatus.

According to a sixth aspect, an embodiment of this application provides a communication method, where the method is applied to a second communication apparatus, the second communication apparatus may be a device, or may be a chip, a functional module, or the like that can be disposed in a device, and the method includes:
receiving first indication information, where the first indication information indicates an index value, and the index value is determined based on K base vectors and K reference base vectors; and determining the K base vectors based on the first indication information and the K reference base vectors.

In a possible implementation, the determining the K base vectors based on the first indication information and the K reference base vectors includes: determining a set Sₖ corresponding to a k^{th} reference base vector in the K reference base vectors, where the set Sₖ represents a value range of an index value of a k^{th} base vector corresponding to the k^{th} reference base vector, the index value of the k^{th} base vector is included in the set Sₖ, and k=0, 1, ..., K-1; and determining the K base vectors based on K sets that correspond to the K reference base vectors, and the index value of the update amount group.

According to a seventh aspect, an embodiment of this application provides a first communication apparatus, configured to perform the method in the first aspect, the second aspect, the fifth aspect, or any possible implementation. The first communication apparatus includes a module that performs the method in the first aspect, the second aspect, the fifth aspect, or any possible implementation.

According to an eighth aspect, an embodiment of this application provides a second communication apparatus, configured to perform the method in the third aspect, the fourth aspect, the sixth aspect, or any possible implementation. The second communication apparatus includes a module that performs the method in the third aspect, the fourth aspect, the sixth aspect, or any possible implementation.

According to a ninth aspect, an embodiment of this application provides a first communication apparatus. The first communication apparatus includes a processor, configured to perform the method in the first aspect, the second aspect, the fifth aspect, or any possible implementation. The processor is configured to execute a program stored in a memory. When the program is executed, the method in the first aspect, the second aspect, the fifth aspect, or any possible implementation is performed.

In a possible implementation, the memory is located outside the first communication apparatus.

In a possible implementation, the memory is located inside the first communication apparatus.

In embodiments of this application, the processor and the memory may alternatively be integrated into one device. In other words, the processor and the memory may alternatively be integrated. For example, the first communication apparatus may be a chip.

In a possible implementation, the first communication apparatus further includes a transceiver. The transceiver is configured to receive information or send information.

According to a tenth aspect, an embodiment of this application provides a second communication apparatus. The second communication apparatus includes a processor, configured to perform the method in the third aspect, the fourth aspect, the sixth aspect, or any possible implementation. The processor is configured to execute a program stored in a memory. When the program is executed, the method in the third aspect, the fourth aspect, the sixth aspect, or any possible implementation is performed.

In a possible implementation, the memory is located outside the second communication apparatus.

In a possible implementation, the memory is located inside the second communication apparatus.

In embodiments of this application, the processor and the memory may alternatively be integrated into one device. In other words, the processor and the memory may alternatively be integrated. For example, the second communication apparatus may be a chip.

In a possible implementation, the second communication apparatus further includes a transceiver. The transceiver is configured to receive information or send information.

According to an eleventh aspect, an embodiment of this application provides a first communication apparatus. The first communication apparatus includes a logic circuit and an interface. The logic circuit is coupled to the interface. The interface is configured to input and/or output information. The logic circuit is configured to perform the method in the first aspect, the second aspect, the fifth aspect, or any possible implementation.

In a possible implementation, that the interface is configured to output the information includes: The interface is configured to output first indication information, second indication information, or the like. For example, the logic circuit is configured to determine precoding information and the like.

According to a twelfth aspect, an embodiment of this application provides a second communication apparatus. The second communication apparatus includes a logic circuit and an interface. The logic circuit is coupled to the interface. The interface is configured to input and/or output information. The logic circuit is configured to perform the method in the third aspect, the fourth aspect, the sixth aspect, or any possible implementation.

In a possible implementation, that the interface is configured to input the information includes: The interface is configured to input first indication information, second indication information, or the like. For example, the logic circuit is configured to determine precoding information based on the first indication information or the second indication information.

According to a thirteenth aspect, an embodiment of this application provides a computer-readable storage medium. The computer-readable storage medium is configured to store a computer program. When the computer program is run on a computer, the method according to any one of the first aspect to the sixth aspect or any possible implementation is performed.

According to a fourteenth aspect, an embodiment of this application provides a computer program product. The computer program product includes a computer program or computer code, and when the computer program or the computer code is run on a computer, the method according to any one of the first aspect to the sixth aspect or any possible implementation is performed.

According to a fifteenth aspect, an embodiment of this application provides a computer program. When the computer program is run on a computer, the method according to any one of the first aspect to the sixth aspect or any possible implementation is performed.

According to a sixteenth aspect, an embodiment of this application provides a communication system. The communication system includes a first communication apparatus and a second communication apparatus.

In a possible implementation, the first communication apparatus is configured to perform the method according to the first aspect or any possible implementation of the first aspect, and the second communication apparatus is configured to perform the method according to the third aspect or any possible implementation of the third aspect.

In a possible implementation, the first communication apparatus is configured to perform the method in the second aspect or any possible implementation of the second aspect, and the second communication apparatus is configured to perform the method in the fourth aspect or any possible implementation of the fourth aspect.

In a possible implementation, the first communication apparatus is configured to perform the method according to the fifth aspect or any possible implementation of the fifth aspect, and the second communication apparatus is configured to perform the method according to the sixth aspect or any possible implementation of the sixth aspect.

### BRIEF DESCRIPTION OF DRAWINGS

FIG. 1 is a diagram of an architecture of a communication system according to an embodiment of this application;
FIG. 2a is a schematic flowchart of channel state information (channel state information, CSI) feedback based on downlink transmission according to an embodiment of this application;
FIG. 2b is a schematic flowchart of CSI indication based on uplink transmission according to an embodiment of this application;
FIG. 3 is a schematic flowchart of a communication method according to an embodiment of this application;
FIG. 4a is a diagram of a region (region) according to an embodiment of this application;
FIG. 4b is a diagram of a correspondence between an index value and three base vectors according to an embodiment of this application;
FIG. 4c is a diagram of different lexicographical sorting methods according to an embodiment of this application;
FIG. 5 is a schematic flowchart of a communication method according to an embodiment of this application;
FIG. 6a is a diagram of an indication manner of location indication information according to an embodiment of this application;
FIG. 6b is a diagram of comparison between a reference coefficient and an update range according to an embodiment of this application;
FIG. 6c is a diagram of comparison between a reference coefficient and an update range according to an embodiment of this application;
FIG. 6d is a diagram of comparison between a reference coefficient and an update range according to an embodiment of this application;
FIG. 7 is a schematic flowchart of a communication method according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

For ease of understanding technical solutions of this application, the following further describes this application with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in this specification may not necessarily refer to a same embodiment, and is not an independent or optional embodiment exclusive from another embodiment. It may be understood explicitly and implicitly by a person skilled in the art that embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

In this application, the "indication" may include a direct indication, an indirect indication, an explicit indication, and an implicit indication. When a specific piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "outputting" of a chip interface, and the "receiving" may alternatively be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

Embodiments of this application provide a communication method and apparatus, to reduce signaling overheads. For example, according to the method provided in this embodiment of this application, signaling overheads for indicating a base vector or a coefficient by the network device to the terminal device can be reduced, or signaling overheads for feeding back a base vector or a coefficient by the terminal device to the network device can be reduced. The foregoing signaling may include but is not limited to DCI, uplink control information (uplink control information, UCI), a media access control (media access control, MAC) control element (control element, CE), or radio resource control (radio resource control, RRC).

The following describes a communication system in embodiments of this application.

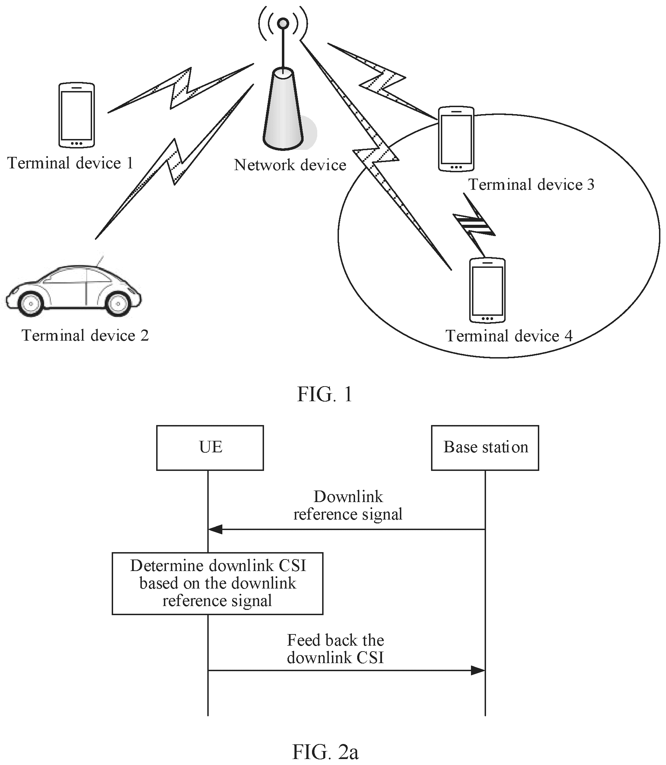

The method provided in embodiments of this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, a new radio (new radio, NR) system, and a new communication system that emerges in future communication development. An IoT network may include, for example, but is not limited to, an internet of vehicles. A communication manner in the internet of vehicles system may be collectively referred to as vehicle-to-everything (vehicle-to-everything, V2X, where X may represent any thing). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication. In FIG. 1 below, a terminal device (for example, a terminal device 3) and a terminal device (for example, a terminal device 4) may communicate with each other by using a device-to-device (device-to-device, D2D) technology, a machine-to-machine (machine-to-machine, M2M) technology, a V2X technology, or the like. The method provided in embodiments of this application may be further applied to non-terrestrial network (non-terrestrial network, NTN) communication (which may also be referred to as non-terrestrial network communication).

The method provided in embodiments of this application may be applied to a wireless local area network (wireless local area network, WLAN) system, for example, Wi-Fi. The method provided in embodiments of this application is applicable to the institute of electrical and electronics engineers (institute of electrical and electronics engineers, IEEE) 802.11 series protocols, for example, the 802.11 be protocol, the 802.11 bn protocol, or a next-generation protocol of the 802.11 bn protocol. Details are not listed one by one. The technical solutions provided in embodiments of this application may be further applied to a wireless personal area network (wireless personal area network, WPAN) based on millimeter wave (millimeter wave, MMW) and ultra-wideband (ultra-wideband, UWB) technologies. For example, the method provided in embodiments of this application is applicable to the IEEE 802.15 series protocols, for example, the 802.15.4a protocol, the 802.15.4z protocol, the 802.15.4ab protocol, or a future generation UWB WPAN protocol. Details are not listed one by one.

The method provided in embodiments of this application may be applied to two entities in a communication system. For example, one of the two entities may send information to the other entity, or receive information sent by the other entity. The information shown herein may be a physical signal such as a preamble or a reference signal; physical layer control information such as downlink control information (downlink control information, DCI) and uplink control information (uplink control information, UCI); control plane (control plane, CP) data such as a radio resource control (radio resource control, RRC) message; and user plane (user plane, UP) data. Details are not listed one by one herein. In this embodiment of this application, the foregoing information may include but is not limited to a reference signal, first indication information, second indication information, update indication information, or the like.

For example, the foregoing two entities may include the network device and the terminal device, or include a chip that may be disposed in the network device, a chip that may be disposed in the terminal device, and the like. Certainly, with progress of the standard, another type of entity may appear subsequently. This is not limited in this embodiment of this application.

FIG. 1 is a diagram of an architecture of a communication system according to an embodiment of this application. As shown in FIG. 1, the communication system may include at least one network device and at least one terminal device, for example, a terminal device 1 to a terminal device 4 in FIG. 1. The terminal device and the network device may communicate with each other through an air interface Uu link, an NTN link, or the like. For example, the terminal device 3 and the terminal device 4 may communicate with each other through a sidelink (sidelink) such as D2D. A form of the terminal device shown in FIG. 1 is merely an example. For example, in specific implementation, the terminal device may further include a vehicle-mounted device, a vehicle-mounted terminal, or the like in an internet of vehicles. A specific form of the terminal device used in the internet of vehicles or the internet is not limited in this embodiment of this application.

The method provided in embodiments of this application is applicable to dynamic grant transmission, or is applicable to grant-free transmission (or referred to as scheduling without a dynamic grant), for example, a preconfigured uplink resource (preconfigured uplink resource, PUR)/configured grant (configured grant, CG), or is applicable to a semi-persistent scheduling (semi-persistent scheduling) transmission method. For example, two-step (2-step)/four-step (4-step) random access (rach occasion, RA) may also be performed in the method provided in this embodiment of this application. The method provided in embodiments of this application may be applied to a high-frequency scenario, for example, a millimeter wave scenario or a terahertz (terahertz, THz) scenario; or may be applied to a low-frequency scenario, for example, a band lower than 7.125 gigahertz (GHz), a band of 700 megahertz (MHz)/900 MHz, or a band of 2.1 GHz/2.6 GHz/3.5 GHz. The method provided in embodiments of this application may be applied to a licensed (licensed) band, or may be applied to an unlicensed (unlicensed) band. In the following descriptions, communication between the terminal device and the network device may use the licensed band, or may use the unlicensed band.

FIG. 1 shows an example of one network device and a plurality of terminal devices. In specific implementation, the communication system may further include more network devices, and a coverage of each network device may include more or fewer terminal devices. This is not limited in this embodiment of this application.

The following describes in detail the terminal device and the network device.

The terminal device is an apparatus having a wireless transceiver function. The terminal device may communicate with an access network device (or may be referred to as an access device or a network device shown below) in a radio access network (radio access network, RAN). The terminal device may also be referred to as a user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor or outdoor scenario, and a handheld or vehicle-mounted scenario; or may be deployed on water, including on a ship. In another possible implementation, the terminal device may be a handheld device having a wireless communication function, a vehicle-mounted device, a wearable device, a sensor, a terminal in an internet of things, a terminal in an internet of vehicles, an uncrewed aerial vehicle, a terminal device in any form in a 5G network or a future network, or the like. This is not limited in embodiments of this application. The terminal device shown in embodiments of this application may be in a connected state, an inactive (inactive) state, an idle (idle) state, or the like. Alternatively, the terminal device may be a terminal device that is not in the foregoing three states, for example, a UE that is not attached to a network or does not perform downlink synchronization with a network.

The network device may be an apparatus that is deployed in a radio access network and that provides a wireless communication service for a terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device having a wireless transceiver function, and includes but is not limited to the base station shown above (including a base station deployed on a satellite). Alternatively, the network device may be an apparatus that has a base station function in 6G. In an example, the network device may be an access node, a wireless relay node, a wireless backhaul node, or the like in a wireless local area network (wireless-fidelity, Wi-Fi) system. In another example, the network device may be a radio controller in a cloud radio access network (cloud radio access network, CRAN) scenario. In still another example, the network device may be a wearable device, a vehicle-mounted device, or the like that can provide a wireless communication service. In still another example, the network device may alternatively be a small cell, a transmission reception point (transmission reception point, TRP) (or may be referred to as a transmission point), or the like. In systems using different radio access technologies, names of communication apparatuses having functions of the network device may be different, and are not listed one by one in embodiments of this application.

In some deployments of the network device, the network device may include a central unit (central unit, CU) and a distributed unit (distributed unit, DU). Functions of a part of protocol layers of the network device are controlled by the CU in a central manner. Functions of a part or all of remaining protocol layers are distributed in the DU, and the CU controls the DU in a central manner. In some other deployments of the network device, the CU may be further split into a CU-control plane (control plane, CP), a CU-user plane (user plane, UP), and the like. In still some other deployments of the network device, the network device may alternatively be in an open radio access network (open radio access network, ORAN) architecture. When the network device is in the ORAN architecture, the network device may be a functional entity, a module, or the like in the ORAN. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and the like. A deployment manner of the network device listed herein is merely an example. With evolution of a standard technology, the network device may have another deployment manner. This is not limited in this embodiment of this application.

The following describes the method provided in embodiments of this application by using a first communication apparatus and a second communication apparatus as an example. The first communication apparatus may be a communication apparatus that sends first indication information, and the second communication apparatus is a communication apparatus that receives the first indication information. Alternatively, the first communication apparatus may be a communication apparatus that sends second indication information, and the second communication apparatus is a communication apparatus that receives the second indication information. In an example, the first communication apparatus may be a terminal device, and the second communication apparatus may be a network device. In another example, the first communication apparatus may be a network device, and the second communication apparatus may be a terminal device. In still another example, the first communication apparatus and the second communication apparatus may be different terminal devices. Specific forms of the first communication apparatus and the second communication apparatus are not listed one by one herein. For ease of description, when some specific examples are used below, an example in which the terminal device is a UE and the network device is a base station is used to describe a method provided in embodiments of this application.

The following describes the method in embodiments of this application.

Generally, precoding (precoding) can effectively reduce interference between multi-stream signals for a user, reduce signal interference between users, or the like, to increase a total system capacity. The following describes precoding by using an example in which the second communication apparatus is a communication apparatus configured to transmit a signal, where for example, the second communication apparatus may send a precoded signal, and the first communication apparatus is a communication apparatus configured to receive the signal.

For example, in a multi-antenna transmission system, a signal model may satisfy Formula (1): $r = Hs + n$
r represents a received signal vector, H represents a channel matrix, s represents a to-be-sent signal vector, and n represents an additive noise vector. Each element in the to-be-sent signal vector s may be referred to as a signal stream or a layer (layer). Because H is not a unit matrix, the received signal vector r includes superposition of signals from a plurality of streams. Consequently, mutual interference exists between the multi-stream signals for a user. Considering that a receiving side (for example, the first communication apparatus) of the signal r further receives a signal of another user, signal interference between the users also exists. Interference of these types limits the total system capacity.

To reduce the interference, the second communication apparatus may perform preprocessing (for example, precoding) on the to-be-sent signal vector s before sending the to-be-sent signal vector s, and then send a preprocessed signal to the first communication apparatus. Generally, the precoding may be multiplying s by a matrix P. The matrix P may be referred to as a precoding matrix, precoding information, a precoding set, or the like. For example, the precoding matrix P may be formed by a part of or all columns in a right singular matrix obtained by performing singular value decomposition (singular value decomposition, SVD) on the channel matrix H. For example, a column of the precoding matrix P may be referred to as a precoding vector.

For example, the matrix P may be determined by using a plurality of base vector sets and coefficients. For example, the base vector set may include but is not limited to at least one of the following: a space domain base vector set, a beam domain base vector set, a frequency domain base vector set, a delay domain base vector set, a time domain base vector set, and a Doppler base vector set. In an example, a column vector (for example, the precoding vector) in the matrix P may be determined by using the space domain base vector set (for example, a matrix formed by space domain base vectors) and coefficients. In another example, a column vector (for example, the precoding vector) in the matrix P may be determined by using the space domain base vector set (for example, a matrix formed by space domain base vectors), the frequency domain base vector set (for example, a matrix formed by frequency domain base vectors), and coefficients. For example, $W = {W}_{1} \times {W}_{2} \times {W}_{f}^{H}$, where W may be used to determine the precoding vector, W1 represents the matrix formed by the space domain base vectors, W_{f} represents the matrix formed by the frequency domain base vectors, and W₂ represents a coefficient matrix formed by the coefficients. In still another example, the matrix P may be determined by using the space domain base vector set (for example, a matrix formed by space domain base vectors), the frequency domain base vector set (for example, a matrix formed by frequency domain base vectors), the time domain base vector set (for example, a matrix formed by time domain base vectors), and coefficients. In still another example, the matrix P may be determined by using the frequency domain base vector set, the beam domain base vector set, and coefficients. In still another example, the matrix P may be determined by using the beam domain base vector set, the delay domain base vector set, and coefficients. In still another example, the matrix P may be determined by using the space domain base vector set, the Doppler domain base vector set, coefficients, and the like. Details are not listed one by one herein. A specific mathematical expression form between the matrix P and the base vector set and the coefficients is not limited in embodiments of this application.

The coefficient shown in embodiments of this application may be a combination coefficient of a base vector. For example, one or more space domain (or beam domain) base vectors are separately multiplied by elements in a group of coefficients and then added, to obtain one precoding vector. For example, when to-be-transmitted signals correspond to different bands or different time, coefficients corresponding to the precoding information may respectively correspond to different bands or different time. The coefficients corresponding to different bands may be the same or may be different. Alternatively, the coefficients corresponding to different time may be the same or may be different. When the coefficients corresponding to different bands have different values, one or more frequency domain (delay domain or the like) base vectors may be used to represent a change rule of the coefficients. Alternatively, when the coefficients corresponding to different time have different values, one or more time domain (Doppler domain or the like) base vectors may be used to represent a change rule of the coefficients. For a relationship between a coefficient and a base vector, refer to a related standard, a related protocol, or the like. This is not limited in embodiments of this application.

For example, the first communication apparatus may obtain channel state information (channel state information, CSI) based on a reference signal. For example, the CSI may be represented in a form of a channel matrix H. After singular value decomposition is performed on the channel matrix H, a right singular matrix V may be obtained, and the precoding matrix P is obtained based on V. All information related to precoding may be referred to as the precoding information. For example, the precoding information may be the space domain base vector set, the beam domain base vector set, the frequency domain base vector set, the delay domain base vector set, the time domain base vector set, the Doppler base vector set, the coefficients, the matrix V, the matrix P, the channel matrix H, or the CSI. In specific implementation, the second communication apparatus may further perform other similar processing on a to-be-transmitted signal with reference to another precoding technology. This is not limited in embodiments of this application. Regardless of how the second communication apparatus processes the signal, precoding information used by the second communication apparatus can be determined by using a base vector or a coefficient, or precoding information may be decomposed into a form of a base vector, a coefficient, or the like, which falls within the protection scope of embodiments of this application.

Because the second communication apparatus needs to perform precoding before sending the signal, the second communication apparatus needs to first obtain the precoding information before sending the signal. The following separately describes different manners of obtaining the precoding information by the second communication apparatus in uplink transmission and downlink transmission.

FIG. 2a is a schematic flowchart of CSI feedback based on downlink transmission according to an embodiment of this application. As shown in FIG. 2a, a first communication apparatus may be a UE, and a second communication apparatus is a base station. As shown in FIG. 2a, a CSI feedback method include the following steps.

The base station sends a downlink reference signal, and the UE receives the downlink reference signal. Then, the UE determines downlink CSI based on the downlink reference signal, and feeds back the downlink CSI to the base station. For example, manners in which the UE feeds back the CSI may include the following manners.
(a) Preset one or more tables of vectors related to the CSI, for example, combine several precoding vectors into one table, where the table may be referred to as a precoding table. For example, the precoding table may include a correspondence between the precoding vectors and indexes. The UE may feed back an index of a precoding vector in the precoding table corresponding to the CSI. In this feedback manner, the UE feeds back the index of the existing precoding vector in the table. Consequently, there is a large error between the precoding vector that is fed back and an actual precoding vector, resulting in low feedback precision. Generally, the precoding table may also be referred to as a codebook (codebook) or the like.
(b) The UE may compress the CSI and feed back the compressed CSI to the base station. For example, the UE may select, from predefined base vectors, a part of base vectors closest to a base vector fed back by the UE, to feed back indexes of these base vectors. Compared with the feedback manner (a), this feedback manner can improve feedback precision, but this feedback manner increases UCI feedback overheads.

Compared with the foregoing manner (a), the foregoing manner (b) may also be referred to as high-precision CSI feedback. Similarly, the foregoing manner (a) may also be referred to as low-precision CSI feedback.

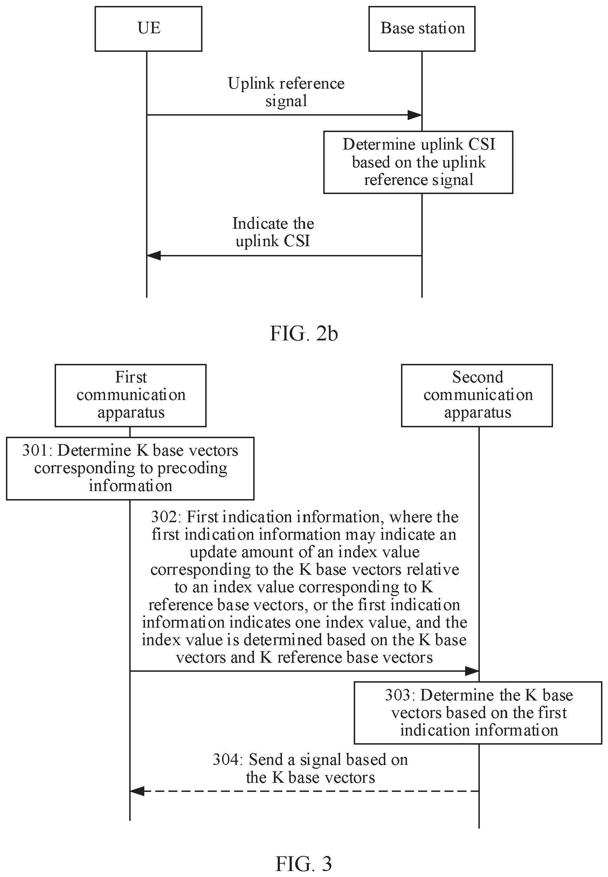

FIG. 2b is a schematic flowchart of CSI indication based on uplink transmission according to an embodiment of this application. As shown in FIG. 2b, a first communication apparatus may be a base station, and a second communication apparatus is a UE. As shown in FIG. 2b, a method in which the base station indicates CSI may include the following steps.

The base station indicates the UE to send an uplink reference signal. For example, the base station may send configuration information of the uplink reference signal to the UE, and the UE may learn of, based on the configuration information, the uplink reference signal that needs to be sent by the UE. The UE sends the uplink reference signal, and the base station receives the uplink reference signal. Then, the base station may determine uplink CSI based on the uplink reference signal, and indicate the uplink CSI to the UE. For example, a manner in which the base station indicates the uplink CSI may include the following manner.

(c) Preset a precoding table, where the precoding table may include a correspondence between an uplink precoding vector and an index. The base station may indicate the index of the uplink precoding vector by using DCI. This feedback manner has low feedback precision.

Considering factors such as power consumption of the UE, bit resourced carried in the DCI are extremely precious. Therefore, if the base station indicates downlink CSI in a manner similar to (b), DCI overheads are excessively large. Generally, more bit resources occupied by the DCI indicate higher power required by the UE to decode the DCI, and consequently, power consumption of the UE is higher.

In view of this, embodiments of this application provide a communication method and apparatus, to further reduce CSI feedback overheads.

FIG. 3 is a schematic flowchart of a communication method according to an embodiment of this application. For related descriptions of a first communication apparatus and a second communication apparatus, refer to FIG. 1, FIG. 2a, or FIG. 2b. Details are not described herein again. As shown in FIG. 3, the method includes the following steps.

301: The first communication apparatus determines K base vectors corresponding to precoding information.

As shown above, the precoding information shown in embodiments of this application may indicate information related to channel information, such as CSI, a channel matrix H, or a matrix P. For related descriptions of the precoding information, the matrix P, and the like, refer to the foregoing descriptions. Details are not described herein again.

For example, the K base vectors may be included in any one of the following: a space domain base vector set, a beam domain base vector set, a frequency domain base vector set, a delay domain base vector set, a time domain base vector set, and a Doppler base vector set. In this embodiment of this application, the K base vectors are used as an example to describe a manner in which the first communication apparatus indicates the CSI or feeds back the CSI. In specific implementation, for example, the space domain base vector set or the beam domain base vector set includes K₁ base vectors, the frequency domain base vector set or the delay domain base vector set includes K₂ base vectors, and the time domain base vector set or the Doppler domain base vector set includes K₃ base vectors. The first communication apparatus may also indicate the K₁ base vectors, the K₂ base vectors, the K₃ base vectors, and the like by using the method shown in this embodiment of this application. K₁, K₂, and K₃ are all positive integers. For example, K₁=K, K₂=K, or K₃=K. Specific values of K₁, K₂, and K₃ are not limited in embodiments of this application.

In this embodiment of this application, regardless of base vector sets used to determine the matrix P, or regardless of base vector sets and coefficients used to determine the matrix P, the first communication apparatus may indicate these base vectors or coefficients by using the method provided in this embodiment of this application. For an indication manner of the base vector, refer to the following step 302. For an indication manner of the coefficient, refer to the following step 502.

302: The first communication apparatus sends first indication information, and correspondingly, the second communication apparatus receives the first indication information. The first indication information may indicate an update amount of an index value corresponding to the K base vectors relative to an index value corresponding to K reference base vectors. Alternatively, the first indication information indicates an index value, and the index value is determined based on the K base vectors and K reference base vectors.

In embodiments of this application, relative to the K reference base vectors, the K base vectors may also be referred to as updated base vectors, base vectors that actually need to be indicated, or the like. Specific names of the K base vectors are not limited in embodiments of this application. The K reference base vectors may be used to determine a value of the update amount. For example, the K reference base vectors may also be referred to as base vectors before update, benchmark base vectors, anchor information, or the like. Specific names of the K reference base vectors are not limited in embodiments of this application. The update amount may also be referred to as an update value, an offset, an offset value, or the like. Details are not listed one by one herein.

The following describes the K reference base vectors.

In an example a, the K reference base vectors may be configured (or referred to as indicated) by a network device. For example, the network device may send configuration information to a terminal device, and the terminal device receives the configuration information, to obtain the K reference base vectors. The configuration information may indicate the K reference base vectors. For example, the configuration information may be carried in any one of the following: DCI, a MAC CE, and RRC. For example, the configuration information may be specific to a UE (for example, UE specific), or specific to a group of UEs (for example, group UE specific), or specific to all UEs in a state in a cell (for example, cell specific), or specific to all UEs in a cell (for example, cell specific). When the network device configures the K reference base vectors, the network device may adjust the K reference base vectors based on a change status of channel information, so that the update amount is as small as possible, or update amounts are as concentrated as possible, to reduce signaling overheads of the first indication information.

In another example b, the K reference base vectors may be initial base vectors reported by a terminal device. For example, after entering a connected mode, the terminal device may send indication information #1 to a network device, where the indication information #1 may indicate the K base vectors. The network device receives the indication information #1, to obtain the K base vectors. For example, the network device may send a downlink signal based on the K base vectors. The K base vectors may be used as the K reference base vectors. Certainly, for uplink transmission, the K reference base vectors may alternatively be initial base vectors indicated by the network device to the terminal device. Details are not described herein. "#1" shown in embodiments of this application is intended to distinguish the first indication information from second indication information, and should not be construed as a limitation on embodiments of this application.

In still another example c, the K reference base vectors may be base vectors reported by a terminal device last time. The last time shown herein is relative to current time. For example, the last time is relative to the current time when the terminal device sends the first indication information. If a moving speed of the terminal device in a time period is less than a threshold, K base vectors reported by the terminal device last time (or at a previous moment) may be used as the K reference base vectors. A manner of setting the K reference base vectors may be negotiated by the terminal device and a network device, or may be defined in a standard. For example, in the standard, K base vectors reported by the terminal device for a specific time may be set as the K reference base vectors. For another example, in a standard protocol, K base vectors initially reported by the terminal device may be set as the K reference base vectors. Details are not listed one by one herein.

In still another example d, the K reference base vectors may be defined in a standard. For example, in factory settings of the first communication apparatus and the second communication apparatus, both the first communication apparatus and the second communication apparatus may store the K reference base vectors.

In embodiments of this application, both the first communication apparatus and the second communication apparatus may store the K reference base vectors. For example, both the first communication apparatus and the second communication apparatus may store a correspondence between the index value corresponding to the K reference base vectors and the K reference base vectors.

In an example, the foregoing correspondence may be configured by a network device, or may be reported by a terminal device. For specific descriptions of the correspondence, refer to the foregoing example a to example c. Details are not described herein again. "a" in the example a, "b" in the example b, and the like in embodiments of this application are for ease of reference, and should not be construed as a limitation on embodiments of this application.

In another example, both the first communication apparatus and the second communication apparatus may determine the foregoing correspondence by using a same method. For example, the first communication apparatus may determine an index value of each of the K reference base vectors by using a method A, and the second communication apparatus may also determine an index value of each of the K reference base vectors by using the method A. For another example, the first communication apparatus may determine, by using a method B, an index value of a base vector group to which the K reference base vectors belong, and the second communication apparatus may also determine, by using the method B, an index value of a base vector group to which the K reference base vectors belong.

In this embodiment of this application, the K reference base vectors are preset, and the first communication apparatus may indicate the K base vectors based on the K reference base vectors, to reduce indication overheads.

The following describes the first indication information.

### Implementation 1

The index value corresponding to the K base vectors may include an index value of each of the K base vectors. The index value corresponding to the K reference base vectors may include an index value of each of the K reference base vectors.

The first indication information may indicate an update amount of the index value of each of the K base vectors relative to an index value of a corresponding reference base vector. The first indication information may indicate K update amounts. A k^{th} update amount in the K update amounts may correspond to an index value of an i^{th} base vector in the K base vectors or an index value of a k^{th} reference base vector in the K reference base vectors. For example, the k^{th} update amount may be an update amount of an index value of a k^{th} base vector relative to the index value of the k^{th} reference base vector, or the k^{th} update amount may be determined based on an index value of a k^{th} base vector and the index value of the k^{th} reference base vector. k=0, 1, ..., K-1. That a start value of k is 0 shown herein is merely an example. For example, in specific implementation, the start value of k may alternatively be 1. In this case, k=1, 2, ..., K. For ease of description, the following uses k=0, 1, ..., K-1 as an example for description when some specific examples are used.

For example, the index value of the k^{th} reference base vector in the K reference base vectors is index₀(k), where k=0, 1, ..., K-1. The index value of the k^{th} base vector in the K base vectors is index(k), where k=0, 1, ..., K-1. The K update amounts may be the following differences in sequence: index(0)-index₀(0), index (1)-index₀(1), index(2)-index₀(2), ..., index(K-2)-index₀(K-2), and index(K-1)-index₀(K-1). Alternatively, the K update amounts may be the following differences in sequence: index₀(0)-index(0), index₀(1)-index(1), index₀(2)-index(2), ..., index₀(K-2)-index(K-2), and index₀(K-1)-index(K-1). For ease of description, d(k) is used below to represent the k^{th} update amount in the K update amounts. For example, d(k)=index(k)-index₀(k) or d(k)=index₀(k)-index(k). Because the update amount may be a positive number, a negative number, or 0, the first indication information may further include a sign, and the sign indicates that an update amount is a negative number or a non-negative number.

A value range of the index value may be 0 to N-1. For example, a value of N may be set by a network device, or may be defined in a standard. For another example, a value of N may be related to a quantity of antennas used when the first communication apparatus sends the first indication information. The index₀(k) shown in this embodiment of this application may be greater than or equal to 0 and less than or equal to N-1. For another example, the index(k) may be greater than or equal to 0 and less than or equal to N-1. Alternatively, when a value range of the index value starts from 1, the value range of the index value may also be 1 to N. For example, the index₀(k) may be greater than or equal to 1 and less than or equal to N. For another example, the index(k) may be greater than or equal to 1 and less than or equal to N.

For ease of understanding, the base vector, the reference base vector, or the update amount is represented by using different mathematical expressions in the foregoing descriptions. However, the mathematical expressions shown in embodiments of this application are merely examples, and should not be construed as a limitation on embodiments of this application.

In an example 1, the first indication information may include the update amount of the index value of each of the K base vectors relative to the index value of the corresponding reference base vector. The first indication information may include the K update amounts shown above.

In this embodiment of this application, the first indication information includes the K update amounts, so that the second communication apparatus can quickly restore the K base vectors. This is easy to implement and has low complexity.

In another example 2, the first indication information includes an index value of an update amount group, so that the index value of the update amount group may indicate the K update amounts. For example, the update amount group may be determined by using the K update amounts, or the update amount group may be a combination of the K update amounts, or the update amount group may correspond to the K update amounts.

As shown above, the K update amounts may be sequentially represented as d(0), d(1), ..., d(K-1). For example, if d(k) has Dₖ possible values, and k=0, 1, ..., K-1, the update amount group may have D₀*D₁*...*D_{K-1} possible values in total. For example, each of the D₀*D₁*...*D_{K-1} possible values may correspond to an index value of an update amount group. The index value included in the first indication information may correspond to one of D₀*D₁*...*D_{K-1} possible values. For another example, to further reduce signaling overheads, a value range of the index value of the update amount group included in the first indication information may be reduced. Therefore, some update amount groups may be further removed with reference to the following conditions. For example, the update amount group may satisfy at least one of the following conditions.

Condition 1: Each of a plurality of update amount groups separately corresponds to K base vectors. For ease of understanding, for example, the K base vectors are used as one set (or referred to as a group and the like), and one update amount group corresponds to one set. In this case, when a plurality of sets corresponding to the plurality of update amount groups are the same, one of the plurality of update amount groups is reserved; or when a plurality of sets determined based on the K reference base vectors and the plurality of update amount groups are the same, one of the plurality of update amount groups is reserved, and each set includes K base vectors. If in all possible values of the update amount groups (D₀*D₁*...*D_{K-1} possible values in total), there are T update amount groups corresponding to T sets that are the same, (T-1) update amount groups may be removed, and one update amount group is reserved. That two sets are the same herein means that for a set A and a set B, all elements in the set A belong to the set B, and all elements in the set B also belong to the set A.

For example, T=3, and three update amount groups are an update group A, an update group B, and an update group C. The update group A corresponds to a base vector set #1, and the base vector set #1 includes K base vectors. The update amount group B corresponds to a base vector set #2, and the base vector set #2 includes K base vectors. The update amount group C corresponds to a base vector set #3, and the base vector set #3 includes K base vectors. When the base vector set #1, the base vector set #2, and the base vector set #3 are the same, one of the three update amount groups is reserved. That the base vector sets shown herein are the same may be understood as that any two sets have same elements. That the base vector sets are the same does not mean that sequences of the elements in the two sets need to be the same. For example, an order of base vectors in the base vector set #1 may be different from an order of base vectors in the base vector set #2.

For another example, if K=3, the index values of the K reference base vectors may be 2, 3, and 4 in sequence. In a case of T=2, if values of three update amounts in one of the two update amount groups may be d(0)=0, d(1)=0, and d(2)=0 in sequence, and values of three update amounts in the other one of the two update amount groups are d(0)=1, d(1)=-1, and d(2)=0 in sequence, indexes of respective K base vectors corresponding to the two update amount groups may be 2, 3, and 4, and 3, 2, and 4. When sequences of the base vectors are not considered, sets (sequences of elements in the sets are not considered) formed by the two groups of base vectors are the same. Therefore, only one of the two update amount groups needs to be reserved.

For another example, if K=3, the index values of the K reference base vectors may be 0, 3, and 4 in sequence. In a case of T=2, if values of three update amounts in one of the two update amount groups may be d(0)=0, d(1)=0, and d(2)=0 in sequence, and values of three update amounts in the other one of the two update amount groups are d(0)=-1, d(1)=0, and d(2)=0 in sequence, indexes of respective K base vectors corresponding to the two update amount groups may be 0, 3, and 4, and -1, 3, and 4. Because index values of the base vectors are all integers greater than or equal to 0, -1 may be corrected to 0, and sets formed by the two groups of base vectors are the same. Therefore, when the index values of the reference base vectors are 0, 3, and 4, only one of the two update amount groups needs to be reserved.

Condition 2: No same base vectors exist in K base vectors corresponding to an update amount group. Alternatively, no same index values exist in index values of K base vectors corresponding to an update amount group.

For example, if K=3, the index values of the K reference base vectors may be 2, 3, and 4 in sequence. When d(0)=1, d(1)=0, and d(2)=0, the index values of the K base vectors are 3, 3, and 4 respectively. Because the same index values exist in the index values of the K base vectors, a value combination of the update amount group may be removed. Because one base vector may correspond to one index value, and different base vectors correspond to different index values, that no same base vectors exist in the K base vectors may also be understood as that no same index values exist in the index values of the K base vectors.

For another example, if K=3, the index values of the K reference base vectors may be 0, 1, and 4 in sequence. When d(0)=-2, d(1)=-1, and d(2)=0, the index values of the K base vectors may be 0, 0, and 4 respectively. Because a minimum value and a maximum value of the index values of the base vectors are limited (for example, are integers greater than or equal to 0), the same index values exist in the index values of the K base vectors. Therefore, a value combination of the update amount group may also be removed.

After an update amount group is removed based on at least one of the foregoing condition 1 or condition 2, if a first update amount group corresponds to K first base vectors, and a second update amount group corresponds to K second base vectors, the K first base vectors and the K second base vectors are different in at least one base vector, or index values of the K first base vectors and index values of the K second base vectors are different in at least one index value. Same first base vectors do not exist in the K first base vectors, and same second base vectors do not exist in the K second base vectors. Alternatively, same index values do not exist in the index values of the K first base vectors, and same index values do not exist in the index values of the K second base vectors. Alternatively, the K first base vectors are different from each other, and the K second base vectors are different from each other. For example, if K base vectors in one set are sorted according to a same rule (for example, in descending order or ascending order), the K first base vectors and the K second base vectors are different in at least one base vector. After the update amount group is removed based on the foregoing condition, possible values of the update amount group may be reduced, thereby reducing a value range of an index value of the update amount group and reducing signaling overheads of the first indication information while ensuring that an indication or feedback range of the K base vectors remains unchanged. Alternatively, under same signaling overheads of the first indication information, the first communication apparatus may indicate or feed back more index values of the K base vectors by removing the update amount group.

After the update amount group is removed, each update amount group may correspond to one index value. For example, after the update amount group is removed based on at least one of the foregoing condition 1 or condition 2, update amount groups may be sorted, so that each update amount group may correspond to one index value. For example, a sorting method may include a lexicographical sorting method. Therefore, update of the K base vectors may be indicated by using the index value of the update amount group. For related descriptions of the lexicographical sorting method, refer to the following descriptions. Details are not described herein.

The foregoing method for removing the update amount group is merely an example, and should not be understood as a limitation on embodiments of this application. In an example, a correspondence between an index value of an update amount group and the update amount group may be defined in a standard, or may be configured by the network device, or may be separately generated by the first communication apparatus or the second communication apparatus based on a specific method, or the like.

In this embodiment of this application, the first indication information includes an index value of an update amount group, so that signaling overheads of the first indication information can be reduced. "1" in the foregoing example 1, "2" in the foregoing example 2, or "3" in the following example 3 below is used to distinguish between different examples and facilitate subsequent reference.

### Implementation 2

In still another example 3, the first indication information indicates one index value. For example, the first indication information may include one index value. For example, the index value may be determined by using the K reference base vectors, or the index value may be determined by using the K reference base vectors and the K base vectors, or there is a correspondence between the index value and the K base vectors. For example, the first communication apparatus may determine the index value based on the K reference base vectors and the K base vectors. Therefore, the first communication apparatus may determine the index value based on the K reference base vectors and the K base vectors without preconfiguring or presetting a relationship between an index value of an update amount group and the update amount group in advance. Correspondingly, the second communication apparatus may determine the K base vectors based on the K reference base vectors and the index value. In other words, the first communication apparatus or the second communication apparatus may also separately learn of the correspondence between the K base vectors and the index value based on a specific method. For a specific method in which the correspondence is separately generated by two communication parties, refer to the following determining method. Details are not described herein.

For example, one index value may correspond to K base vectors. For example, if the K base vectors are referred to as one set, a plurality of index values may correspond to a plurality of sets. The plurality of sets may be sorted in a lexicographical order, and then each sorted set may sequentially correspond to one sorted index value. Index values may be sorted in descending order or in ascending order. Although the index value shown in Implementation 2 corresponds to the K base vectors, the index value is determined based on all possible update amounts for the reference base vectors relative to the base vectors. Therefore, the index value indicated by the first indication information may also be referred to as an index value of an update amount group or the like. A specific name of the index value is not limited in embodiments of this application.

### Implementation 3

The index value corresponding to the K base vectors may include an index value of a base vector group to which the K base vectors belong. The index value corresponding to the K reference base vectors may include an index value of the base vector group to which the K reference base vectors belong. The base vector group may refer to K base vectors selected from a predefined base vector set, and the K base vectors belong to the space domain base vector set, the beam domain base vector set, the frequency domain base vector set, the delay domain base vector set, the time domain base vector set, or the Doppler domain base vector set.

In still another example 4, the first indication information may indicate an update amount of the index value of the base vector group to which the K base vectors belong relative to the index value of the base vector group to which the K reference base vectors belong. Alternatively, the first indication information may indicate one update amount, and the update amount is an update amount of the index value of the base vector group to which the K base vectors belong relative to the index value of the base vector group to which the K reference base vectors belong. It may be understood that, the update amount in Implementation 3 is the update amount of the group index value of the base vector group to which the K base vectors belong relative to the group index value of the base vector group to which the K reference base vectors belong, while the update amount in Implementation 1 is the update amount of the index value of each of the K base vectors relative to the index value of the corresponding reference base vector in the K reference base vectors. In other words, the update amount has different meanings in different implementations. That is, meanings of the update amount in Implementation 1 and the update amount in Implementation 3 are different.

For example, the base vector group to which the K base vectors belong may be one base vector group in Q base vector groups, that is, a value range of the index value of the base vector group to which the K base vectors belong may be 0 to Q-1. Q may be less than or equal to ${C}_{N}^{K}$*.* For example, a value range of an index value of each base vector may be 0 to N-1, and the index value of each base vector may have N values. In addition, because a sequence of base vectors in one base vector group does not need to be considered, there may be a total of ${C}_{N}^{K}$ base vector groups. Each base vector group may correspond to one index value. The Q base vector groups are sorted (for example, in a lexicographical sorting method), to obtain an index value of each base vector group. For example, the index value of the base vector group to which the K reference base vectors belong is A, and a value range of A is 0 to Q-1. If the index value of the base vector group to which the K base vectors belong is A', the update amount indicated by the first indication information may be A-A' or A'-A.

303: The second communication apparatus determines the K base vectors based on the first indication information.

After receiving the first indication information from the first communication apparatus, the second communication apparatus may determine the K base vectors based on the K reference base vectors stored in the second communication apparatus and the index value corresponding to the K reference base vectors. For example, the second communication apparatus may alternatively determine the precoding information based on the first indication information. For example, the second communication apparatus may alternatively determine the CSI or the like based on the first indication information. For a relationship between the precoding information and the K base vectors, refer to the descriptions in step 301. Details are not described herein again.

The following describes, with reference to content of the first indication information shown in Implementation 1 to Implementation 3, a specific manner in which the second communication apparatus determines the K base vectors.

With reference to Implementation 1, the second communication apparatus may determine the K base vectors based on the first indication information and the index value of each of the K reference base vectors. For example, the second communication apparatus may determine the K base vectors based on the index value of each of the K reference base vectors and the K update amounts indicated by the first indication information.

The foregoing example 1 is used as an example. The second communication apparatus may determine the k^{th} base vector based on the index value of the k^{th} reference base vector and the k^{th} update amount. For related descriptions of k, refer to Implementation 1. Details are not described herein again. For example, the index value of the k^{th} base vector may be determined based on the index value of the k^{th} reference base vector, an operation result of the k^{th} update amount, and a value range of the index value. For example, the second communication apparatus may first obtain the index value of the k^{th} reference base vector and an addition operation result of the k^{th} update amount, and then limit, by limiting a maximum value and a minimum value, the addition operation result to a value range allowed by the index value of the k^{th} base vector. For example, the K base vectors determined by the second communication apparatus may satisfy either of the following: $index \left(k\right) = mod \left({index}_{0}\left(k\right)+d\left(k\right),N\right)$ $index \left(k\right) = max \left(min\left({index}_{0}\left(k\right)+d\left(k\right),N-1\right),0\right)$
mod() represents a modulo operation, max() represents a maximum value operation, and min() represents a maximum value operation. For specific descriptions of content such as index(k), index₀(k), d(k), or N, refer to Implementation 1. Details are not described herein again.

For Formula (2), when the index value exceeds the value range of 0 to N-1, the index value may be limited to 0 to N-1 through a modulo operation in Formula (2). For Formula (3), the index value may be limited to 0 to N-1 through the maximum value returning operation and the minimum value returning operation. In specific implementation, the second communication apparatus may alternatively determine the K base vectors in another manner. Details are not listed one by one herein.

The foregoing example 2 is used as an example. The second communication apparatus may determine the K base vectors based on the index value of each of the K reference base vectors and the K update amounts, corresponding to the index value, in the first indication information. For example, the K update amounts, corresponding to the index value, in the first indication information are d(0), d(1), ..., d(K-1) in sequence. The K base vectors determined by the second communication apparatus may satisfy Formula (2) or Formula (3). Details are not described herein again.

With reference to Implementation 2, the second communication apparatus may determine the K base vectors based on the K reference base vectors and the index value of the first indication information. For a specific determining method, refer to the following descriptions. Details are not described herein.

With reference to Implementation 3, the second communication apparatus may determine the K base vectors based on the first indication information and the index value of the base vector group to which the K reference base vectors belong. For example, the second communication apparatus may determine, based on the update amount that is of the index value of the base vector group and that is indicated by the first indication information and the index value of the base vector group to which the K reference base vectors belong, the index value of the base vector group to which the K base vectors belong, and determine the K base vectors based on the index value. For example, the index value of the base vector group to which the K base vectors determined by the second communication apparatus belong may satisfy either of the following: $A ′ = mod \left(A+B,N\right)$ $A ′ = max \left(min\left(A+B,N-1\right),0\right)$

A represents the index value of the base vector group to which the K reference base vectors belong, B represents the update amount of the index value of the base vector group, and A' represents the index value of the base vector group to which the K base vectors belong. For other descriptions of Formula (4) and Formula (5), refer to Formula (2) or Formula (3) in the foregoing descriptions. Details are not described herein again.

In a possible implementation, the method shown in FIG. 3 may further include step 304.

304: The second communication apparatus sends a signal based on the K base vectors.

For example, the second communication apparatus may learn of the precoding information based on the K base vectors determined by the second communication apparatus, and therefore, the second communication apparatus may transmit a precoded signal. Therefore, interference between multi-stream signals for a user or signal interference between users can be effectively reduced, thereby increasing a total system capacity. For related descriptions of the precoding information and the like, refer to the foregoing descriptions. Details are not described herein again.

In an example, the first communication apparatus may be a network device, and the second communication apparatus is a terminal device. The first indication information may be carried in DCI, a MAC CE, or RRC. For example, the terminal device may send an uplink signal based on a precoding matrix. For example, the uplink signal may be carried on a PUSCH.

In another example, the first communication apparatus may be a terminal device, and the second communication apparatus is a network device. The first indication information may be carried on at least one of a PUCCH or a PUSCH. For example, the network device may send a downlink signal based on a precoding matrix. For example, the downlink signal may be carried on a PDSCH.

In still another example, both the first communication apparatus and the second communication apparatus may be terminal devices. The first indication information may be carried in SCI. Scenarios to which embodiments of this application are applied are not listed one by one herein.

In this embodiment of this application, the first communication apparatus may indicate, to the second communication apparatus based on the first indication information, the update amount of the index value corresponding to the K base vectors relative to the index value corresponding to the K reference base vectors. Because a value range of the update amount is far less than a value range of the index value corresponding to the K base vectors, the method provided in this embodiment of this application effectively reduces the signaling overheads of the first indication information. For example, when the method provided in this embodiment of this application is applied to uplink transmission, DCI signaling overheads can be effectively reduced.

Generally, a channel environment between two communication parties changes slowly. Therefore, the value range of the update amount is generally small. For example, the update amount is generally greater than or equal to a first threshold and less than or equal to a second threshold. For example, the first threshold may be equal to -2, and the second threshold may be equal to 2. For another example, the first threshold may be equal to -1, and the second threshold may be equal to 1. For another example, the first threshold may be equal to -1, and the second threshold may be equal to 3. Specific values of the first threshold or the second threshold are not listed one by one herein. Therefore, according to the method provided in this embodiment of this application, signaling overheads can be effectively reduced. Certainly, when the method provided in this embodiment of this application is applied to an NTN, because a satellite runs at a high speed, the value range of the update amount may be greater than a value range of an update amount corresponding to a terrestrial network (terrestrial network, TN). However, compared with indicating the index value corresponding to the K base vectors, the method provided in this embodiment of this application can still effectively reduce the signaling overheads.

As shown in Implementation 2, the first communication apparatus may determine the index value based on the K reference base vectors and the K base vectors. Correspondingly, the second communication apparatus may determine the K base vectors based on the index value and the K reference base vectors. The following describes a determining method provided in embodiments of this application. According to the determining method shown below, for the first communication apparatus, the index value can be determined, and for the second communication apparatus, the K base vectors can be determined, and some update amount groups can be automatically removed, so that the K base vectors can satisfy the foregoing condition 1 or condition 2.

For ease of description, for example, the index value index₀(k) of the k^{th} reference base vector in the K reference base vectors is denoted as uₖ, and the index value index(k) of the k^{th} base vector in the K base vectors is denoted as vₖ. In this case, the index value of the K reference base vectors may be u=(u₀, u₁, ..., u_{K-1}), and the index value of the K base vectors may be v=(v₀, v₁, ..., vₖ₋₁). k=0, 1, ..., K-1. For each uₖ, uₖ may correspond to an updated range set Sₖ, that is, an updated element vₖ of uₖ belongs to the set Sₖ, where k=0, 1, ..., K-1. Sₖ may be represented as a set of possible values of the k^{th} base vector corresponding to the k^{th} reference base vector in the K reference base vectors. Values of K elements in v are different, and a value of u or a value of v is unrelated to an arrangement sequence of the K elements.

Because the channel environment between the two communication parties changes slowly, values of uₖ and vₖ do not change greatly, for example, |vₖ - uₖ| ≤ Δ. In an example, Δ= 2 and u₀=3. In this case, a set S₀ corresponding to u₀ is equal to {1, 2, 3, 4, 5}. In other words, v₀∈{1, 2, 3, 4, 5}. In another example, Δ= 2, u₀=3, and a quantity of possible values of each element in v may have a specific limitation condition, for example, the quantity of possible values of each element may be a power of 2. In this case, if a set S₀ corresponding to u₀ is equal to {2, 3, 4, 5} (merely used as an example), v₀∈{2, 3, 4, 5} (merely used as an example). If an updated range set corresponding to u₀ is S₀, an updated range set corresponding to u₁ is S₁, ..., an updated range set corresponding to u_{K-1} is S_{K-1}, a total quantity of possible values of v may be represented as C(S₀, S₁, ..., S_{K-1}), and a value of an index value r may range from 0 to C(S₀, S₁, ..., S_{K-1})-1. For example, a value of Δ may be related to a change status of the channel environment. Certainly, the foregoing mathematical expression form is merely an example. As shown above, a relationship between vₖ and uₖ may alternatively be represented in the following formula. For example, vₖ and uₖ may also satisfy the following relationship: The update amount (for example, represented as d(k) or dₖ) is greater than or equal to the first threshold and less than or equal to the second threshold.

A method in which the first communication apparatus determines the index value may include: The first communication apparatus may determine the index value r based on the K reference base vectors and the K base vectors. For example, the first communication apparatus may determine a set Sₖ corresponding to the k^{th} reference base vector in the K reference base vectors, and determine the index value r based on K sets that correspond to the K reference base vectors, and the K base vectors.

A method in which the second communication apparatus determines the K base vectors may include: The second communication apparatus determines the K base vectors based on the K reference base vectors and the index value r. For example, the second communication apparatus may determine the set Sₖ corresponding to the k^{th} reference base vector in the K reference base vectors, determine the index value r based on the first indication information, and determine the K base vectors based on the set Sₖ and the index value r.

Details are as follows.
(1) Determine the set Sₖ.

For example, the set Sₖ may satisfy the following relationship: ${S}_{k} = \left\{max\left(min\left({u}_{k}+{d}_{k},N-1\right),0\right)\left|{d}_{k}∈{D}_{k}\right.\right\}$

Dₖ represents a value set of an update amount corresponding to uₖ. max() represents a maximum value returning operation, and min() represents a minimum value returning operation. k=0, 1, ..., K-1. The foregoing method for determining the set Sₖ is merely an example. In specific implementation, the set Sₖ may alternatively be determined according to another operation formula or another method. Details are not listed one by one herein.

The foregoing method for determining the set Sₖ is applicable to both the first communication apparatus and the second communication apparatus.

(2) Determine the quantity C(S₀, S₁, ..., S_{K-1}) of value combinations.
u=(u₀, u₁, ..., u_{K-1}) and corresponding K sets S₀, S₁, ..., S_{K-1} are known. It is assumed that there are a total of C(S₀, S₁, ..., S_{K-1}) corresponding different v. The "different v" shown herein means that values of v are different after elements in v are sorted. In other words, K elements in v are considered as a sequence-independent set, and "different v" means that corresponding sequence-independent sets are different.

In this embodiment of this application, a method for determining C(S₀, S₁, ..., S_{K-1}) may include an element recursion method and a region recursion method. Names of the element recursion method and the region recursion method shown in embodiments of this application are merely examples, and should not be understood as any limitation on embodiments of this application. Descriptions are provided below separately.

(31) Determine C(S₀, S₁, ..., S_{K-1}) in the element recursion method.

For example, S₀, S₁, ..., S_{K-1} are sorted based on respective minimum values, that is, min{S₀}≤min{S₁}≤...≤min{S_{K-1}}.

For example, if a=min{S₀}, C(S₀, S₁, ..., S_{K-1}) may satisfy the following relationship: $C \left({S}_{0},{S}_{1},…,{S}_{K - 1}\right) = C \left({S}_{0}\\left\{a\right\},{S}_{1}\\left\{a\right\},…,{S}_{K - 1}\\left\{a\right\}\right) + C \left({S}_{0}\\left\{a\right\},…,{S}_{q - 1}\\left\{a\right\},{S}_{q + 1}\\left\{a\right\},…,{S}_{K - 1}\\left\{a\right\}\right)$

Sₖ\{a} represents a set obtained by removing a from the set Sₖ. For example, Sₖ\{a}={i|i∈Sₖ, and i≠a}.

The set S_{q} is a set whose maximum value is the smallest in all sets including the element a. For example, q=Q(a).

For example, if S₀={2, 3, 4}, S₁={2, 3, 4, 5}, S₂={2, 3, 4, 5, 6}, and S₃={3, 4, 5}, a=2. Sets including the element a include S₀, S₁, and S₂, and corresponding maximum values are 4, 5, and 6 respectively. In this case, the maximum value of 4 of the set S₀ is the smallest in the three sets. That is, the set whose maximum value is the smallest in the sets including the element a is S₀. Therefore, q=0, and C(S₀, S₁, S₂)=C(S₀\{2}, S₁\{2}, S₂\{2})+C(S₁\{2}, S₂\{2}).

The right side of the equal sign in Formula (7) may be considered to be formed by two items. A recursive formula continues to be used for the two items, and because the set includes fewer elements or a quantity of sets is smaller, a value of C(S₀, S₁, ..., S_{K-1}) may be obtained based on some termination conditions. For example, the termination condition may satisfy at least one of the following: Termination condition 1: When any one of the K sets S₀, S₁, ..., S_{K-1} is an empty set, the value of C(S₀, S₁, ..., S_{K-1}) is 0. Termination condition 2: C(S₀)=|S₀|, in other words, when K=1, the value is a quantity of elements in the set S₀.

(32) Determine C(S₀, S₁, ..., S_{K-1}) in the region recursion method.

First, a region formed by a segment of consecutive points that belong to a same set cluster is referred to as a region. The set cluster is a set of sets.

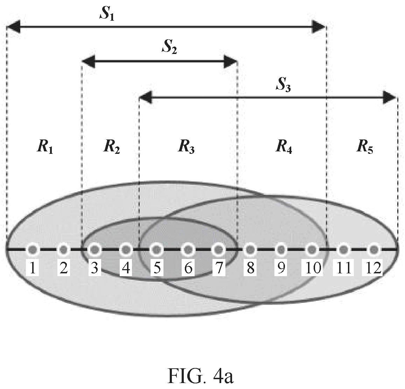

For example, FIG. 4a is a diagram of a region (region) according to an embodiment of this application. As shown in FIG. 4a, sets S₁, S₂, and S₃ are used as examples. In FIG. 4a, a region R1 is a region formed by consecutive points that belong to only the set cluster S₁, a region R₂ is a region formed by consecutive points that belong to only the set cluster S₁ and the set cluster S₂, a region R₃ is a region formed by consecutive points that belong to the set cluster S₁, the set cluster S₂, and the set cluster S₃, a region R₄ is a region formed by consecutive points that belong to only the set cluster S₁ and the set cluster S₃, and a region R₅ is a region formed by consecutive points that belong to only the set cluster S₃.

For example, for the region R, if R⊆S₁⊆S₂⊆...⊆S_{Q}, C(S₁, S₂, ..., S_{K}) may satisfy the following relationship: $C \left({S}_{1},{S}_{2},…,{S}_{K}\right) = {\sum }_{q = 0}^{Q} \left(\begin{matrix}\left|R\right| \\ q\end{matrix}\right) C \left({S}_{q + 1}\R, {S}_{q + 2}\R,…,{S}_{K}\R\right)$

S_{q+1}\R represents a set formed by remaining elements obtained by removing an element in the region R from the set S_{q+1}, S_{q+2}\R represents a set formed by remaining elements obtained by removing the element in the region R from the set S_{q+2}, and the rest is deduced by analogy. S_{K}\R represents a set formed by remaining elements obtained by removing the element in the region R from the set S_{K}. For example, in a recursion process, if K=0 occurs, C(zero sets)=1.

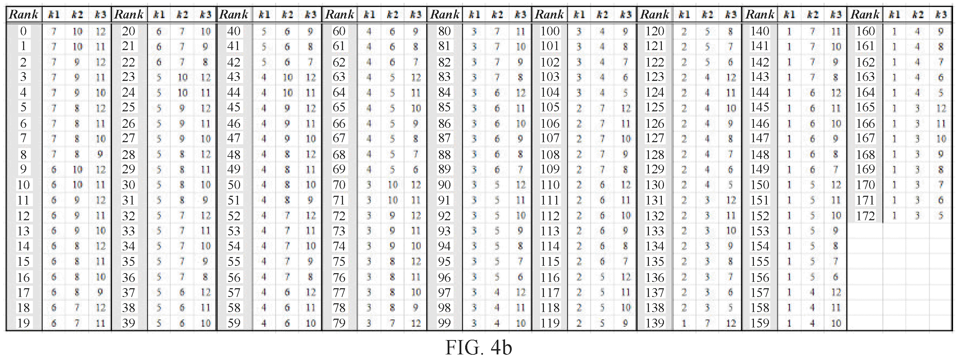

For example, as shown in FIG. 4a, S₁={1, 2, ..., 10}, S₂={3, 4, ..., 7}, and S₃={5, 6, ..., 12}. In this case, Ri={1, 2}, R₂={3, 4}, R₃={5, 6, 7}, R₄={8, 9, 10}, and R₅=. All combinations may be obtained through derivation according to Formula (8), as shown in FIG. 4b. In FIG. 4b, a column in which *Rank* is located represents an index value, and *k*1*, k2,* and *k*3 are three base vectors. S₁ may be understood as being determined based on the K reference base vectors and Δ. Therefore, specific values of the K reference base vectors and a specific value of Δ are not shown in the example in FIG. 4b.

An arrangement manner shown in FIG. 4b is merely an example, and should not be understood as a limitation on embodiments of this application. A relationship between the index value and the K base vectors is not limited in embodiments of this application. For example, the index value may be in one-to-one correspondence with the K base vectors in a lexicographical sorting manner.

The foregoing process of determining C(S₀, S₁, ..., S_{K-1}) is merely an example. In specific implementation, after the first communication apparatus determines K sets (for example, S₀, S₁, ..., S_{K-1}) corresponding to the K reference base vectors, the first communication apparatus may determine, in the lexicographical sorting method, the index value r corresponding to the K base vectors. Correspondingly, after the second communication apparatus determines the K sets (for example, S₀, S₁, ..., S_{K-1}) corresponding to the K reference base vectors, the second communication apparatus may also determine, in the lexicographical sorting method, the K base vectors corresponding to the index value r.

The following describes the lexicographical sorting method in embodiments of this application.

Lexicographical order: Possible values of all C(S₀, S₁, ..., S_{K-1}) combinations are sorted. Each possible value may correspond to one sequence number, and a value range of the sequence number may be 0 to C(S₀, S₁, ..., S_{K-1})-1.

For combination values including K elements, it is assumed that a value range of each element is 0 to N-1. This may be represented in the following method:
1. Represented in a value or an index of an element: For example, u=(u₀, u₁, ..., u_{K-1}), and uₖ∈{0, 1, ..., N-1}.
2. Represented in a bitmap: For example, b=(b₀, b₁, ..., b_{N-1}), and bᵢ={0, 1}.

In the lexicographical sorting method, a value of an element for an index or in a bitmap may be sorted in order, then a value of another element is sorted in order, and the rest is deduced by analogy.

For example, a sorting method may include at least one of the following: sorting from left to right (left-msb), sorting from right to left (right-msb), sorting in descending order of values of elements, or sorting in ascending order of values of elements.
Manner 1: (sorting from left to right) and (sorting in descending order of index values or in ascending order of bitmap values)
Manner 2: (sorting from left to right) and (sorting in ascending order of index values or in descending order of bitmap values)
Manner 3: (sorting from right to left) and (sorting in ascending order of index values or in ascending order of bitmap values)
Manner 4: (sorting from right to left) and (sorting in descending order of index values or in descending order of bitmap values)

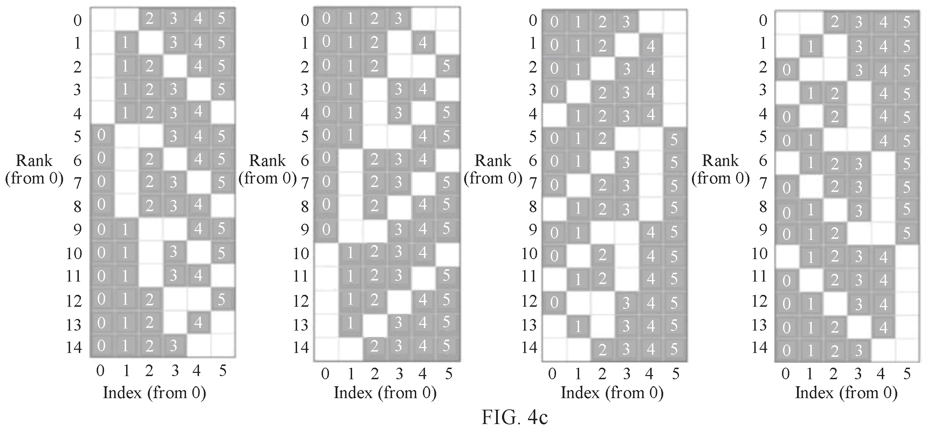

FIG. 4c shows an example of different sorting methods. As shown in FIG. 4c, from left to right, a 1^{st} figure corresponds to Manner 1, a 2^{nd} figure corresponds to Manner 2, a 3^{rd} figure corresponds to Manner 3, and a 4^{th} figure corresponds to Manner 4. It may be understood that, from the perspective of a bitmap and an index, a matrix formed in Manner 1 may be an equivalent matrix obtained by vertically flipping a matrix formed in Manner 2. From the perspective of a bitmap, a matrix formed in Manner 1 may be an equivalent matrix obtained by horizontally flipping a matrix formed in Manner 3. From the perspective of an index, a matrix formed in Manner 1 may be an equivalent matrix, of that formed in Manner 3, obtained by changing values from x to N-x-1 (it is assumed that a value of x ranges from 0 to N-1).

The following shows an example of a method for determining an index value (Ranking) based on combination values (namely, K base vectors). The following method for determining an index value is applicable to the first communication apparatus. For example, when learning of K sets S₀, S₁, ..., S_{K-1} and the K base vectors (namely, the combination values shown herein), the first communication apparatus may determine the index value r (or referred to as a sequence number) in the following method.

Manner 1 is used as an example. For example, a set S(v) is a set formed by all elements greater than v in a set S, that is, S(v)={i|i∈S and i>v}. v=(v₀, v₁, ..., v_{K-1}), where 0≤vₖ<vₖ₊₁≤N-1. For example, the index value r corresponding to v may satisfy the following relationship: $\begin{matrix}r = \\ C \left({S}_{0}\left({v}_{0}\right),…,{S}_{k}\left({v}_{0}\right),…,{S}_{K - 1}\left({v}_{0}\right)\right) + \\ C \left({S}_{0}\left({v}_{1}\right),…,{S}_{k}\left({v}_{1}\right),…,{S}_{K - 1}\left({v}_{1}\right),k∉\left\{Q\left({v}_{0}\right)\right\}\right) + \\ C \left({S}_{0}\left({v}_{2}\right),…,{S}_{k}\left({v}_{2}\right),…,{S}_{K - 1}\left({v}_{2}\right),k∉\left\{Q\left({v}_{0}\right),Q\left({v}_{1}\right)\right\}\right) + \\ … + \\ C \left({S}_{0}\left({v}_{K - 1}\right),…,{S}_{k}\left({v}_{K - 1}\right),…,{S}_{K - 1}\left({v}_{K - 1}\right),k∉\left\{Q\left({v}_{0}\right),Q\left({v}_{1}\right),…,Q\left({v}_{K - 2}\right)\right\}\right)\end{matrix}$

Meanings of the items in Formula (9) are described by using an example. C(S₀(v₂), ..., Sₖ(v₂), ..., S_{K-1}(v₂), k∉{Q(v₀), Q(v₁)}) is used as an example. For example, S₀(v₂), ..., Sₖ(v₂), ..., S_{K-1}(v₂), k∉{Q(v₀), Q(v₁)} represents K-2 sets, that is, two sets k=Q(v₀) and k=Q(v₁) are removed from K sets S₀(v₂), ..., Sₖ(v₂), ..., S_{K-1}(v₂). For related descriptions of the function Q shown herein, refer to the foregoing descriptions, for example, the related descriptions of q=Q(a). Details are not described herein again.

Manner 2 is used as an example. For example, a set S(v) is a set formed by all elements greater than v in a set S, that is, S(v)={i|i∈S and i>v}. v=(v₀, v₁, ..., v_{K-1}), where 0≤vₖ<vₖ₊₁≤N-1. For example, the index value r corresponding to v may satisfy the following relationship: $\begin{matrix}r = N - 1 - \\ C \left({S}_{0}\left({u}_{0}\right),…,{S}_{k}\left({u}_{0}\right),…,{S}_{K - 1}\left({u}_{0}\right)\right) + \\ C \left({S}_{0}\left({u}_{1}\right),…,{S}_{k}\left({u}_{1}\right),…,{S}_{K - 1}\left({u}_{1}\right),k∉\left\{Q\left({u}_{0}\right)\right\}\right) + \\ C \left({S}_{0}\left({u}_{2}\right),…,{S}_{k}\left({u}_{2}\right),…,{S}_{K - 1}\left({u}_{2}\right),k∉\left\{Q\left({u}_{0}\right),Q\left({u}_{1}\right)\right\}\right) + \\ … + \\ C \left({S}_{0}\left({u}_{K - 1}\right),…,{S}_{k}\left({u}_{K - 1}\right),…,{S}_{K - 1}\left({u}_{K - 1}\right),k∉\left\{Q\left({u}_{0}\right),Q\left({u}_{1}\right),…,Q\left({u}_{K - 2}\right)\right\}\right)\end{matrix}$

Manner 3 is used as an example. For example, a set S(v) is a set formed by all elements less than v in a set S, that is, S(v)={i|i∈S and i<v}. v=(v₀, v₁, ..., v_{K-1}), where 0≤vₖ<vₖ₊₁≤N-1. For example, the index value r corresponding to v may satisfy the following relationship: $\begin{matrix}r = \\ C \left({S}_{0}\left({u}_{K - 1}\right),…,{S}_{k}\left({u}_{K - 1}\right),…,{S}_{K - 1}\left({u}_{K - 1}\right)\right) + \\ C \left({S}_{0}\left({u}_{K - 2}\right),…,{S}_{k}\left({u}_{K - 2}\right),…,{S}_{K - 1}\left({u}_{K - 2}\right),k∉\left\{Q\left({u}_{K - 1}\right)\right\}\right) + \\ C \left({S}_{0}\left({u}_{K - 3}\right),…,{S}_{k}\left({u}_{K - 3}\right),…,{S}_{K - 1}\left({u}_{K - 3}\right),k∉\left\{Q\left({u}_{K - 1}\right),Q\left({u}_{K - 2}\right)\right\}\right) + \\ … + \\ C \left({S}_{0}\left({u}_{0}\right),…,{S}_{k}\left({u}_{0}\right),…,{S}_{K - 1}\left({u}_{0}\right),k∉\left\{Q\left({u}_{K - 1}\right),Q\left({u}_{K - 1}\right),…,Q\left({u}_{1}\right)\right\}\right)\end{matrix}$

Manner 4 is used as an example. For example, a set S(v) is a set formed by all elements less than v in a set S, that is, S(v)={i|i∈S and i<v}. v=(v₀, v₁, ..., v_{K-1}), where 0≤vₖ<vₖ₊₁≤N-1. For example, the index value r corresponding to v may satisfy the following relationship: $\begin{matrix}r = N - 1 - \\ C \left({S}_{0}\left({u}_{K - 1}\right),…,{S}_{k}\left({u}_{K - 1}\right),…,{S}_{K - 1}\left({u}_{K - 1}\right)\right) + \\ C \left({S}_{0}\left({u}_{K - 2}\right),…,{S}_{k}\left({u}_{K - 2}\right),…,{S}_{K - 1}\left({u}_{K - 2}\right),k∉\left\{Q\left({u}_{K - 1}\right)\right\}\right) + \\ C \left({S}_{0}\left({u}_{K - 3}\right),…,{S}_{k}\left({u}_{K - 3}\right),…,{S}_{K - 1}\left({u}_{K - 3}\right),k∉\left\{Q\left({u}_{K - 1}\right),Q\left({u}_{K - 2}\right)\right\}\right) + \\ … + \\ C \left({S}_{0}\left({u}_{0}\right),…,{S}_{k}\left({u}_{0}\right),…,{S}_{K - 1}\left({u}_{0}\right),k∉\left\{Q\left({u}_{K - 1}\right),Q\left({u}_{K - 1}\right),…,Q\left({u}_{1}\right)\right\}\right)\end{matrix}$

A method for determining combination values (Unranking) (for example, K base vectors) based on an index value is provided. The following method for determining the combination value is applicable to the second communication apparatus. For example, when learning of K sets S₀, S₁, ..., S_{K-1} and the index value r, the second communication apparatus may determine the K base vectors in the following method.

A process of generating the corresponding combination value based on the index value is also related to a lexicographical sorting manner. For example, Manner 1 is used as an example, and the process of determining the combination value may include:

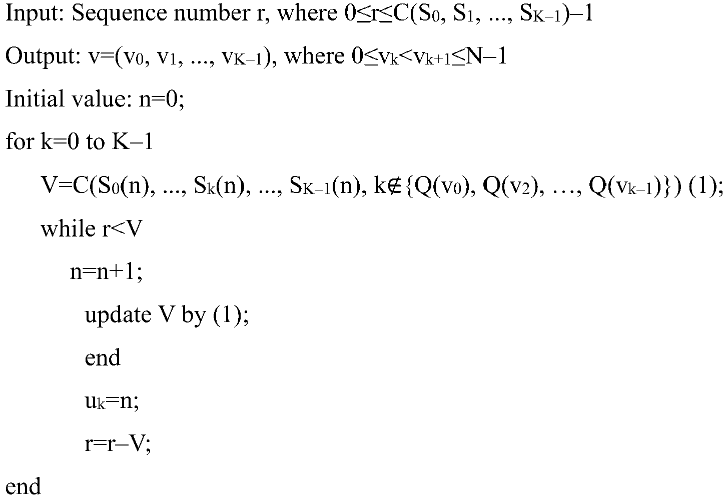

The foregoing lexicographical sorting methods are merely examples, and should not be understood as a limitation on embodiments of this application.

The determining method shown above may be combined with FIG. 3, or may be a separate embodiment. When the foregoing determining method is a separate embodiment, as shown above, each element in u may correspond to one reference base vector, and each element in v may correspond to one base vector. Alternatively, the determining method shown above may be extended to another application scenario. For example, the foregoing determining method may also be applied to a scenario of updating ports of a plurality of reference signals, for example, updating a plurality of DMRS ports during downlink multi-stream transmission or updating a plurality of DMRS ports during uplink multi-stream transmission. For example, a network device may send a DMRS configuration to a terminal device, and the terminal device may receive a DMRS based on the DMRS configuration, to perform channel estimation based on the DMRS. When the network device needs to update a DMRS port, the network device may indicate an index value to the terminal device in the determining method shown above. The index value may be determined based on a reference DMRS port and the DMRS port. In this case, each element in u shown above may correspond to one demodulation reference signal (demodulation reference signal, DMRS) port, and each element in v may correspond to one DMRS port. Alternatively, the foregoing determining method may be applied to a scenario of updating a plurality of beam directions. For example, when uplink non-codebook based (non-codebook based) transmission is performed, a base station may indicate a plurality of SRS port numbers to the terminal device. In this case, the base station may determine an index value according to the determining method shown above, and the index value may be determined based on a reference port number and a port number. As shown above, each element in u may correspond to one reference port number, and each element in v may correspond to one port number. For another example, the terminal device may feed back, to the network device, a plurality of beam directions selected by the terminal device. In this case, the terminal device may determine an index value according to the determining method shown above, and the index value may be determined based on a reference beam direction and the beam direction. As shown above, each element in u may correspond to one reference beam direction, and each element in v may correspond to one beam direction. When the determining method shown above is extended to another application scenario, for specific descriptions, refer to the foregoing descriptions. Details are not described herein again.

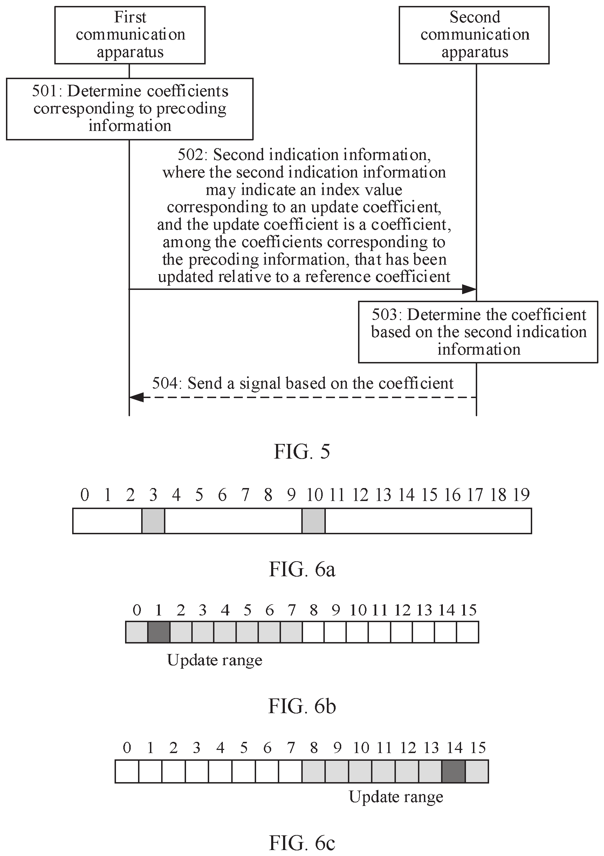

FIG. 5 is a schematic flowchart of a communication method according to an embodiment of this application. For related descriptions of a first communication apparatus and a second communication apparatus, refer to FIG. 1, FIG. 2a, or FIG. 2b. Details are not described herein again. As shown in FIG. 5, the method includes the following steps.

501: The first communication apparatus determines coefficients corresponding to precoding information.

For related descriptions of a relationship between the precoding information and the coefficients, refer to the foregoing descriptions, such as related descriptions of Formula (2) or related descriptions of step 301 in FIG. 3. Details are not described herein again.

Generally, a quantity of coefficients is related to a quantity of base vectors. In an example, when a precoding vector is determined by using space domain base vector sets and coefficients, for example, when a quantity of space domain base vectors is K₁, a quantity of coefficients is K₁. In another example, when a precoding vector is determined by using space domain base vector sets, frequency domain base vector sets, and coefficients, for example, when a quantity of space domain base vectors is K₁, and a quantity of frequency domain base vectors is K₂, a quantity of coefficients may be K₁*K₂. Details are not listed one by one herein. Regardless of the precoding information corresponds to how many coefficients, the first communication apparatus may indicate these coefficients in the method provided in this embodiment of this application.

For example, a quantity of coefficients corresponding to the precoding information may be more than one. In this case, the coefficients corresponding to the precoding information may also be referred to as a coefficient set, or the plurality of coefficients may be in a form of a coefficient matrix, or the like. Specific forms of the coefficients corresponding to the precoding information are not limited in this embodiment of this application. For example, the coefficients corresponding to the precoding information may also be collectively referred to as all coefficients.

502: The first communication apparatus sends second indication information, and correspondingly, the second communication apparatus receives the second indication information. The second indication information may indicate an index value corresponding to an update coefficient, and the update coefficient is a coefficient, among the coefficients corresponding to the precoding information, that has been updated relative to a reference coefficient.

In this embodiment of this application, the coefficients corresponding to the precoding information may also be referred to as updated coefficients, coefficients that actually need to be indicated, or the like relative to the reference coefficient. Specific names of the coefficients corresponding to the precoding information are not limited in this embodiment of this application. For example, the reference coefficient may also be referred to as a coefficient before update, a reference coefficient, anchor information, or the like. A specific name of the reference coefficient is not limited in this embodiment of this application.

The coefficients corresponding to the precoding information may include at least one of the following: a zero coefficient, a non-zero coefficient, a variable zero coefficient, and a variable non-zero coefficient. In an example, a part of coefficients corresponding to the precoding information may be zero coefficients, or a part of coefficients corresponding to the precoding information may be non-zero coefficients. In another example, the coefficients corresponding to the precoding information may also include a variable zero coefficient or a variable non-zero coefficient. In still another example, the coefficients corresponding to the precoding information may include a zero coefficient, a variable zero coefficient, a non-zero coefficient, and a variable non-zero coefficient. Specific composition of the coefficients corresponding to the precoding information is not limited in this embodiment of this application.

For example, the zero coefficient may be understood as a coefficient whose value is 0 in the coefficients corresponding to the precoding information. The non-zero coefficient may be understood as a coefficient whose value is not 0 in the coefficients corresponding to the precoding information.

For example, the variable zero coefficient may be a coefficient that is easily changed to a non-zero coefficient in coefficients whose values are 0. The variable non-zero coefficient may be a coefficient whose value is easily changed in coefficients whose values are not 0. For example, a coefficient close to one or more non-zero coefficients in zero coefficients is the variable zero coefficient. A coefficient close to one or more zero coefficients in non-zero coefficients is the variable non-zero coefficient. For example, a zero coefficient whose corresponding base vector is changed is referred to as the variable zero coefficient, and a non-zero coefficient whose corresponding base vector is changed is referred to as the variable non-zero coefficient. The change shown herein is relative to a reference base vector. Specific definition of the variable zero coefficient or the variable non-zero coefficient is not limited in this embodiment of this application.

Generally, a coefficient is multiplied by a corresponding base vector (for example, a space domain base vector, a beam domain base vector, a frequency domain base vector, a delay domain base vector, a time domain base vector, or a Doppler domain base vector). Therefore, it may be considered that each coefficient is associated with one or more base vectors. If two base vectors of a same type (the same type refers to a same domain, for example, the space domain base vector, the beam domain base vector, the frequency domain base vector, the delay domain base vector, the time domain base vector, or the Doppler domain base vector) associated with two coefficients are close, it is considered that the two coefficients are close. For example, for base vectors generated by obtaining a column or a part of values of a column of a discrete Fourier transform (discrete Fourier transform, DFT) matrix, if locations of two base vectors in the DFT matrix are close, it may be considered that the two base vectors are close. For example, if indexes of the two base vectors in the DFT matrix are i and j respectively, mod(|i-j|, N/2) may be used as a method for measuring proximity of the two base vectors, where N is a quantity of dimensions of the DFT matrix and N is an even number. For example, if mod(|i-j|, N/2) is less than a value, it may be considered that the two base vectors are close. Elements in an I^{th} row and a J^{th} column in the DFT matrix may be represented as exp(2*pi*I*J/matrix dimension*alpha), where exp() represents an exponential function, and alpha is a preset constant, which may be a positive number or may be a negative number. i, j, I, and J are all non-negative integers (namely, integers greater than or equal to 0).

The following describes the reference coefficient.

In an example, the reference coefficient may be configured by a network device. For example, the network device may send configuration information to a terminal device, and the terminal device receives the configuration information, to obtain the reference coefficient. For example, the configuration information may be specific to a UE (for example, UE specific), or specific to a group of UEs (for example, group UE specific), or specific to all UEs in a state in a cell (for example, cell specific), or specific to all UEs in a cell (cell specific). For example, the network device may separately configure K reference base vectors and the reference coefficient based on different configuration information. For example, an update frequency of the coefficient configured by the network device may be higher than an update frequency of the K reference base vectors. For other descriptions of the configuration information, refer to the descriptions of step 302 in FIG. 3. Details are not described herein again.

In another example, the reference coefficient may be an initial reference coefficient reported by the terminal device. For example, after entering a connected mode, the terminal device may send indication information #2 to the network device, where the indication information #2 may indicate the reference coefficient. The network device receives the indication information #2, to obtain the reference coefficient. Certainly, for uplink transmission, the reference coefficient may also be an initial reference coefficient indicated by the network device to the terminal device. Details are not described herein.

In still another example, the reference coefficient may be a reference coefficient reported by the terminal device last time. For related descriptions of the last time, refer to the descriptions of step 302 in FIG. 3. Details are not described herein again.

In still another example, the reference coefficient may be a reference coefficient indicated by the network device last time.

For related descriptions of the reference coefficient, refer to related descriptions of the foregoing example a to example d. Details are not described herein again.

In this embodiment of this application, both the first communication apparatus and the second communication apparatus may store the reference coefficient. For example, both the first communication apparatus and the second communication apparatus may store a correspondence between an index value corresponding to the reference coefficient and the reference coefficient. For specific descriptions of determining the foregoing correspondence by the first communication apparatus and the second communication apparatus, refer to related descriptions of the K reference base vectors in step 302 in FIG. 3. Details are not described herein again.

The following describes the second indication information.

The second indication information may include at least one of the following: value indication information or location indication information. The following first describes in detail information content included in the second indication information, and then describes in detail specific content of the value indication information and the location indication information.

In an example, the second indication information may include the value indication information.

For example, the value indication information may indicate index values corresponding to all coefficients, or indicate update amounts of index values corresponding to all coefficients relative to the index value corresponding to the reference coefficient. For another example, the value indication information may indicate index values corresponding to all zero coefficients and index values corresponding to all non-zero coefficients; or indicate update amounts of index values corresponding to all zero coefficients relative to the index value corresponding to the reference coefficient, and update amounts of index values corresponding to all non-zero coefficients relative to the index value corresponding to the reference coefficient. For another example, the value indication information may indicate index values corresponding to all variable zero coefficients and index values corresponding to all variable non-zero coefficients; or indicate update amounts of index values corresponding to all variable zero coefficients relative to the index value corresponding to the reference coefficient, and update amounts of index values corresponding to all variable non-zero coefficients relative to the index value corresponding to the reference coefficient. For example, a type indicated by the value indication information may be defined in a standard, or may be configured by the network device. This is not limited in this embodiment of this application. For example, if the coefficients corresponding to the precoding information include a coefficient #1, regardless of whether an index value corresponding to the coefficient #1 is updated relative to an index value corresponding to a reference coefficient #1, the value indication information indicates the index value corresponding to the coefficient #1 or an update amount of the coefficient #1.

For example, the value indication information may indicate the index value corresponding to the update coefficient, or an update amount of the index value corresponding to the update coefficient relative to the index value corresponding to the reference coefficient. A location of the update coefficient in all coefficients may be indicated by third indication information. For example, in specific duration, a channel environment between the terminal device and the network device may not change greatly. Therefore, the first communication apparatus may indicate the location of the update coefficient in all the coefficients based on the third indication information. When the update coefficient changes in the specific duration, the first communication apparatus may indicate, based on the second indication information, the index value corresponding to the update coefficient. For example, the coefficients corresponding to the precoding information include a coefficient #2. When an index value corresponding to the coefficient #2 is not updated relative to an index value corresponding to a reference coefficient #2, the value indication information may not indicate the index value corresponding to the coefficient #2. When the index value corresponding to the coefficient #2 is updated relative to the index value corresponding to the reference coefficient #2, the value indication information may indicate the index value corresponding to the coefficient #2 or an update amount of the coefficient #2.

In another example, the second indication information may include the value indication information and the location indication information. For example, when the value indication information indicates index values (or update amounts) corresponding to a part of coefficients, the second indication information may further include the location indication information. A location of the coefficient may determine which base vectors the coefficient is associated with. For example, if the coefficients corresponding to the precoding information are also arranged into a coefficient vector or a coefficient matrix in an arrangement sequence of the base vectors, a location of a coefficient may be a location of the coefficient in the coefficient vector or the coefficient matrix.

The following describes in detail specific content of the value indication information and the location indication information.

First, the following describes a specific indication manner of the location indication information.

The location indication information may indicate a location of an update coefficient in the coefficient matrix. For example, if a coefficient corresponding to an a^{th} row and a b^{th} column in the coefficient matrix is updated relative to a reference coefficient corresponding to an a^{th} row and a b^{th} column in a reference coefficient matrix, the coefficient corresponding to the a^{th} row and the b^{th} column may be referred to as the update coefficient. For example, when a phase of a coefficient is updated relative to a phase of the reference coefficient, or when an amplitude of a coefficient is updated relative to an amplitude of the reference coefficient, the coefficient may be referred to as the update coefficient.

A range indicated by the location indication information may include any one of the following: a variable zero coefficient and a variable non-zero coefficient; a variable zero coefficient and a non-zero coefficient; a zero coefficient and a variable non-zero coefficient; and a zero coefficient and a non-zero coefficient. When the range indicated by the location indication information includes the variable zero coefficient and the variable non-zero coefficient, the location indication information may indicate a location of a coefficient that is most likely to change, thereby reducing indication overheads. When the range indicated by the location indication information includes the zero coefficient and the non-zero coefficient, the location indication information may indicate locations of all coefficients that may change in the coefficient matrix, and an indication range is the widest.

In an example, the location indication information may indicate a location of the update coefficient in all coefficients in a form of a bitmap. For example, if the coefficients are arranged in a matrix form, a quantity of variable zero coefficients in the coefficient matrix is n₁, a quantity of variable non-zero coefficients in the coefficient matrix is n₂, a quantity of non-zero coefficients in the coefficient matrix is n₃, and a quantity of zero coefficients in the coefficient matrix is n₄. n₁, n₂, n₃, and n₄ are all integers greater than or equal to 0. For example, the location indication information may be a bitmap with a length of n₁+n₂ bits, each of n₁ bits in the bitmap may correspond to one variable zero coefficient, and each of n₂ bits in the bitmap may correspond to one variable non-zero coefficient. For another example, the location indication information may be a bitmap with a length of n₁+n₃ bits, each of n₁ bits in the bitmap may correspond to one variable zero coefficient, and each of n₃ bits in the bitmap may correspond to one non-zero coefficient. For another example, the location indication information may be a bitmap with a length of n₃+n₄ bits, each of n₃ bits in the bitmap may correspond to one non-zero coefficient, and each of n₄ bits in the bitmap may correspond to one zero coefficient. A specific length of the bitmap is not listed one by one herein. For example, if a value of a bit is 1, it indicates that a coefficient at a corresponding location is an update coefficient. For another example, if a value of a bit is 0, it indicates that a coefficient at a corresponding position is not updated relative to the reference coefficient.

In another example, the location indication information may indicate a location of the update coefficient in the coefficient matrix in a form of an index. For example, each coefficient in the range indicated by the location indication information may correspond to one index value. For example, if the range indicated by the location indication information includes the variable zero coefficient and the variable non-zero coefficient, each coefficient in the range may correspond to one index value. For example, all coefficients that may be updated in the range indicated by the location indication information may correspond to one global index (or referred to as an overall index or the like). For example, to further reduce indication overheads, the global index may be set based on a fixed quantity in the range indicated by the location indication information. For example, if the fixed quantity is m, m coefficients may be separately selected as one combination in the range indicated by the location indication information, then the selected plurality of combinations are sorted, and each combination may correspond to one global index.

The following uses an example to describe differences between the foregoing indication forms. For example, there are a total of 20 coefficients in the range indicated by the location indication information. Update coefficients are a 3^{rd} coefficient and a 10^{th} coefficient in the 20 coefficients. As shown in FIG. 6a, counting starts from zero, and gray parts in FIG. 6a represent the update coefficients.

For example, the location indication information may be a bitmap with a length of 20 bits, and each bit in the bitmap may correspond to one of the 20 coefficients. For example, the bitmap may be a 00010 00000 10000 00000. A 0^{th} bit in the bitmap may correspond to a 0^{th} coefficient in the 20 coefficients, a 1^{st} bit in the bitmap may correspond to a 1^{st} coefficient in the 20 coefficients, and the rest is deduced by analogy.

For another example, each of the 20 coefficients may correspond to one index value. For example, if the index value starts from 0, index values indicated by the location indication information may be 3 and 10.

For another example, two coefficients are randomly selected from the 20 coefficients for sorting (for example, the two coefficients may be sorted in a lexicographical order), to obtain the global index. Then, the update coefficients are indicated by global indexes corresponding to the 3^{rd} coefficient and the 10^{th} coefficient.

In addition, the following describes a specific indication manner of the value indication information.

The value indication information may indicate an update amount of an index value corresponding to an update coefficient relative to an index value corresponding to a reference coefficient in a reference coefficient matrix. Alternatively, the value indication information may indicate the index value corresponding to the update coefficient. The index value corresponding to the update coefficient may include the index value of the update coefficient, an index value of a quantized update coefficient, an index value of a quantized update coefficient, or an index value of a coefficient obtained by normalizing the update coefficient.

A coefficient is generally a complex value. For example, when a phase of a coefficient is updated, the value indication information may indicate an index value corresponding to the phase of the coefficient. Alternatively, when an amplitude of a coefficient is updated, the value indication information may indicate an index value corresponding to the amplitude of the coefficient. Alternatively, the value indication information may indicate an update amount of an index value corresponding to a phase of the update coefficient relative to an index value corresponding to a phase of the reference coefficient, or indicate an update amount of an index value corresponding to an amplitude of the update coefficient relative to an index value corresponding to an amplitude of the reference coefficient. For example, the value indication information may include phase indication information and amplitude indication information. The phase indication information may indicate the index value corresponding to the phase of the update coefficient, or the update amount of the index value corresponding to the phase of the update coefficient relative to the index value corresponding to the phase of the reference coefficient. The amplitude indication information may indicate the index value corresponding to the amplitude of the update coefficient, or the update amount of the index value corresponding to the amplitude of the update coefficient relative to the index value corresponding to the phase of the reference coefficient. The location indication information may include first location indication information and second location indication information. The first location indication information may indicate a location, in the coefficient matrix, of a coefficient whose phase is updated relative to the reference coefficient. The second location indication information may indicate a location, in the coefficient matrix, of a coefficient whose amplitude is updated relative to the reference coefficient. The first location indication information and the second location indication information may be the same, or may be different. This is not limited in this embodiment of this application. For example, when the first location indication information is the same as the second location indication information, the second indication information may include one piece of location indication information. Specific sequences of phases or amplitudes of update coefficients indicated in the value indication information are not limited in this embodiment of this application. For example, the coefficient matrix includes a first update coefficient and a second update coefficient, and the value indication information may sequentially indicate a phase of the first update coefficient, an amplitude of the first update coefficient, a phase of the second update coefficient, and an amplitude of the second update coefficient. Alternatively, the value indication information may sequentially indicate a phase of the first update coefficient, a phase of the second update coefficient, an amplitude of the first update coefficient, and an amplitude of the second update coefficient. For ease of description, the following uses an example in which the value indication information indicates the update amount of the index value corresponding to the update coefficient relative to the index value corresponding to the reference coefficient for description in some examples. However, this should not be construed as a limitation on embodiments of this application. The index value corresponding to the update coefficient may include the index value corresponding to the phase of the update coefficient, or the index value corresponding to the amplitude of the update coefficient.

For example, the first communication apparatus may determine, based on the correspondence stored in the first communication apparatus, the index value corresponding to the update coefficient. If the first communication apparatus stores a relationship between a quantized coefficient and an index value of the coefficient, the index value corresponding to the update coefficient may be an index value of a quantized update coefficient. Alternatively, the value indication information may indicate an update amount of an index value of a quantized update coefficient relative to an index value of a quantized reference coefficient. Indication overheads can be effectively reduced by indicating the update amount. Certainly, the value indication information may alternatively directly indicate the index value corresponding to the update coefficient.

For example, the first communication apparatus may perform quantization on an amplitude or a phase of each update coefficient, and determine, based on the foregoing correspondence and a quantized coefficient, an index value corresponding to the update coefficient. Table 1 shows an example of a correspondence between a value of an amplitude of a quantized update coefficient and an index value. The index value and the value of the quantized amplitude of the update coefficient shown in Table 1 are merely examples, and should not be construed as a limitation on embodiments of this application.

**Table 1**

| Index value | Value of a quantized update coefficient |
|---|---|
| 0 | $\frac{1}{8 \sqrt{2}}$ |
| 1 | $\frac{1}{8}$ |
| 2 | $\frac{1}{4 \sqrt{2}}$ |
| 3 | $\frac{1}{4}$ |
| 4 | $\frac{1}{2 \sqrt{2}}$ |
| 5 | $\frac{1}{2}$ |
| 6 | $\frac{1}{\sqrt{2}}$ |
| 7 | 1 |

The index value corresponding to the update coefficient in the amplitude indication information shown below may be understood as the index value corresponding to the amplitude of the update coefficient, and the index value corresponding to the reference coefficient may be understood as the index value corresponding to the amplitude of the reference coefficient. The amplitude of the update coefficient is updated relative to the amplitude of the reference coefficient.

For example, a value range of the index value corresponding to the update coefficient and indicated by the amplitude indication information may be determined by using the index value corresponding to the reference coefficient. For example, a range of the index value corresponding to the reference coefficient is 0 to N-1. For example, the first communication apparatus may determine at least one of the following based on the range of the index value corresponding to the reference coefficient: a quantity of bits (or referred to as a length) occupied by the amplitude indication information, a minimum value in a value range of the index value corresponding to the update coefficient and indicated by the amplitude indication information, or a maximum value in a value range of the index value corresponding to the update coefficient and indicated by the amplitude indication information. For example, when the range of the index value corresponding to the reference coefficient is a first range, the minimum value in the value range of the index value corresponding to the update coefficient and indicated by the amplitude indication information may be 0. For another example, when the range of the index value corresponding to the reference coefficient is a second range, the maximum value in the value range of the index value corresponding to the update coefficient and indicated by the amplitude indication information may be N. For example, a length n of the amplitude indication information may satisfy the following relationship: 2ⁿ<N. For example, a maximum value of the first range may be less than or equal to a minimum value of the second range.

For example, there are N index values in total, and a range of the index value is 0 to N-1. The length of the amplitude indication information is n bits. For example, an update amount indicated by the amplitude indication information may include 2ⁿ bits. Therefore, the index value corresponding to the update coefficient and indicated by the amplitude indication information may include 2ⁿ bits. If counting starts from 0, the value range of the index value corresponding to the update coefficient and indicated by the amplitude indication information may be 0 to 2ⁿ-1. One block in FIG. 6b to FIG. 6d may represent one index value. For example, 16 blocks may sequentially correspond to an index value 0 to an index value 15. In FIG. 6b to FIG. 6d, a dark gray box represents the index value corresponding to the reference coefficient, and a light gray box represents the value range of the index value corresponding to the update coefficient.

In an example, the index value corresponding to the reference coefficient ranges from 0 to 7. As shown in FIG. 6b, the index value corresponding to the reference coefficient is 1. Because the index value corresponding to the reference coefficient is in a range of small index values, a start location of the index value corresponding to the update coefficient and indicated by the amplitude indication information may be a smallest index value. If the index value corresponding to the reference coefficient is less than or equal to 2ⁿ⁻¹-1, an update range of the index value corresponding to the update coefficient may be 0 to 2ⁿ-1. Alternatively, if the index value corresponding to the reference coefficient is less than or equal to 2ⁿ⁻¹, an update range of the index value corresponding to the update coefficient may be 0 to 2ⁿ-1. Because the index value corresponding to the reference coefficient is small, the index value of the update coefficient may be the minimum. Therefore, a start location in the update range of the index value corresponding to the update coefficient may start from the minimum index value.

In another example, the index value corresponding to the reference coefficient ranges from 8 to 15. As shown in FIG. 6c, the index value corresponding to the reference coefficient is 14. Because the index value corresponding to the reference coefficient is in a range of large index values, an end location of the index value corresponding to the update coefficient and indicated by the amplitude indication information may be a maximum index value. If a value obtained by subtracting the index value corresponding to the reference coefficient from the maximum index value is less than or equal to 2ⁿ⁻¹-1, an update range of the index value corresponding to the update coefficient is from the maximum index value-(2ⁿ-1) to the maximum index value. Alternatively, if a value obtained by subtracting the index value corresponding to the reference coefficient from the maximum index value is less than or equal to 2ⁿ⁻¹, an update range of the index value corresponding to the update coefficient is from the maximum index value-(2ⁿ-1) to the maximum index value.

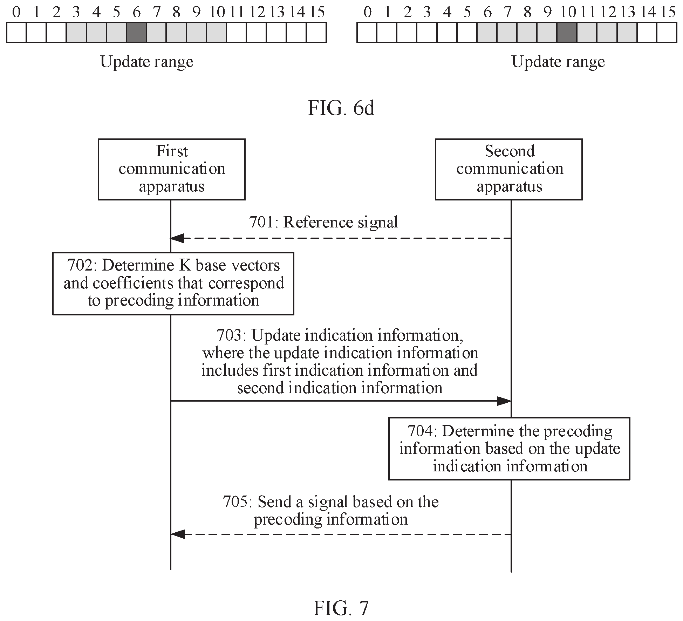

In still another example, the index value corresponding to the reference coefficient is in an intermediate range. As shown in FIG. 6d, the index value corresponding to the reference coefficient is 6 or 10. Because the index value corresponding to the reference coefficient is in a range of intermediate index values, a start location of the index value corresponding to the update coefficient and indicated by the amplitude indication information may be the index value corresponding to the reference coefficient. For example, an update range of the index value corresponding to the update coefficient may be the index value corresponding to the reference coefficient-(2ⁿ⁻¹-1) to the index value corresponding to the reference coefficient+2ⁿ⁻¹. Alternatively, an update range of the index value corresponding to the update coefficient may be the index value corresponding to the reference coefficient-2ⁿ⁻¹ to the index value corresponding to the reference coefficient+(2ⁿ⁻¹+1).

In the foregoing three examples, the larger index value, the smaller index value, and the intermediate index value are relative, and are all shown by using a possible value range of the index value as an example.

For example, when the index value corresponding to the reference coefficient is less than or equal to N/2-1, the update range of the index value corresponding to the update coefficient may be the index value corresponding to the reference coefficient-(2ⁿ⁻¹-1) to the index value corresponding to the reference coefficient+2ⁿ⁻¹. Otherwise, the update range of the index value corresponding to the update coefficient is set to the index value corresponding to the reference coefficient-2ⁿ⁻¹ to the index value corresponding to the reference coefficient+(2ⁿ⁻¹+1).

In this embodiment of this application, quantities of bits occupied by amplitude indication information for different update coefficients may be different. For example, when the update coefficient is the variable zero coefficient or the variable non-zero coefficient, the amplitude indication information may occupy more bits than when the update coefficient is the non-variable zero coefficient or the non-variable non-zero coefficient. For example, when the phase of the update coefficient changes, the amplitude indication information may occupy more bits than when the phase of the update coefficient does not change. For example, when a phase change value of the update coefficient exceeds a threshold, the amplitude indication information may occupy more bits than when the phase change value of the update coefficient does not exceed the threshold.

For example, quantities of bits of phase indication information for different update coefficients may be different. For example, when the update coefficient is the variable zero coefficient or the variable non-zero coefficient, the phase indication information may occupy more bits than when the update coefficient is the non-variable zero coefficient or the non-variable non-zero coefficient. For example, when the amplitude of the update coefficient changes, the phase indication information may occupy more bits than when the amplitude of the update coefficient does not change. For example, when an amplitude change value of the update coefficient exceeds a threshold, the phase indication information may occupy more bits than when the amplitude change value of the update coefficient does not exceed the threshold.

503: The second communication apparatus determines the coefficient based on the second indication information.

For example, the second communication apparatus may determine, based on the second indication information, the update coefficient and a coefficient corresponding to the update coefficient. For example, the second communication apparatus may determine, based on the index value corresponding to the reference coefficient and an update amount indicated by the second indication information, the index value corresponding to the update coefficient, and determine the update coefficient based on the index value. For another example, the second communication apparatus may determine, based on the index value corresponding to the reference coefficient, the location indication information, and the value indication information, the index value corresponding to the update coefficient, and determine the update coefficient based on the index value. For another example, the second communication apparatus may determine, based on the index value corresponding to the reference coefficient and the phase indication information, the index value corresponding to the update coefficient. For example, the index value corresponding to the update coefficient may be the index value of the phase of the update coefficient. For example, Index value of the phase of the update coefficient=mod(Index value of the phase corresponding to the reference coefficient+Update amount indicated by the phase indication information, Total quantity of phase indexes). For related descriptions of the location indication information and the value indication information, refer to step 502. Details are not described herein again.

In a possible implementation, the method shown in FIG. 5 may further include step 504.

504: The second communication apparatus sends a signal based on the coefficient.

For example, the second communication apparatus may learn of the precoding information based on the coefficient determined by the second communication apparatus, and therefore, the second communication apparatus may transmit the precoded signal. Therefore, complexity of processing the signal received by the first communication apparatus can be reduced, and overheads can be reduced.

In this embodiment of this application, the first communication apparatus indicates, to the second communication apparatus based on the second indication information, the update amount of the index value corresponding to the update coefficient relative to the index value corresponding to the reference coefficient. Because a value range of the update amount is far less than a value range of the index value corresponding to the update coefficient, the method provided in this embodiment of this application effectively reduces indication overheads of the second indication information. For example, when the method provided in this embodiment of this application is applied to uplink transmission, DCI signaling overheads can be effectively reduced.

The implementations, examples, methods, or the like shown above may be combined with each other, or may be separately provided as an embodiment. The methods shown in FIG. 3 and FIG. 5 may be combined. When the methods shown in FIG. 3 and FIG. 5 are combined, the first communication apparatus may indicate both the K base vectors and the coefficient, or the first communication apparatus may separately include first indication information, second indication information, and the like in different messages. A specific combination manner is not limited in this embodiment of this application. For example, FIG. 7 is a schematic flowchart of a communication method according to an embodiment of this application. As shown in FIG. 7, the method includes the following steps.

In a possible implementation, the method shown in FIG. 7 may include step 701 and step 705.

701: A second communication apparatus sends a reference signal, and the first communication apparatus receives the reference signal.

In an example, the first communication apparatus may be a network device, and the second communication apparatus is a terminal device. The reference signal may include a sounding reference signal (sounding reference signal, SRS) and the like. A specific type of the reference signal is not limited in this embodiment of this application.

In another example, the first communication apparatus may be a terminal device, and the second communication apparatus is a network device. The reference signal may include a channel state information-reference signal (channel state information-reference signal, CSI-RS) and the like. A specific type of the reference signal is not limited in this embodiment of this application.

In still another example, both the first communication apparatus and the second communication apparatus may be terminal devices. The reference signal may include a sidelink related RS (sidelink related RS).

702: The first communication apparatus determines K base vectors and coefficients that correspond to precoding information.

For related descriptions of step 702, refer to FIG. 3 or FIG. 5, for example, step 301 or step 501. Details are not described herein again.

703: The first communication apparatus sends update indication information to the second communication apparatus, where the update indication information includes the first indication information and the second indication information.

For related descriptions of the first indication information, refer to FIG. 3. For related descriptions of the second indication information, refer to FIG. 5.

704: The second communication apparatus determines the precoding information based on the update indication information.

705: The second communication apparatus sends a signal based on the precoding information, and correspondingly, the first communication apparatus receives the signal.

For specific descriptions of FIG. 7, refer to the foregoing descriptions. Details are not described herein again.

The following describes the method provided in this embodiment of this application with reference to a specific scenario. Example 1 and Example 2 below are shown by using uplink transmission as an example. For example, the first communication apparatus is the network device, and the second communication apparatus is the terminal device. Example 1 is shown by using a scheduling scenario as an example, and Example 2 is shown by using a scheduling-free scenario as an example. Example 3 below is shown by using downlink transmission as an example. For example, the first communication apparatus is the terminal device, and the second communication apparatus is the network device. For specific descriptions of Example 1 to Example 3, refer to the foregoing descriptions. Details are not described below again. The following examples are merely examples, and should not be construed as a limitation on embodiments of this application.

### Example I

(11) The network device configures predefined uplink precoding.

The predefined uplink precoding shown herein may include the K reference base vectors or the reference coefficient shown above. For example, the network device may configure K₁ reference space domain base vectors, K₂ reference frequency domain base vectors, K₃ reference time domain base vectors, and the like. Certainly, for a method for configuring the K reference base vectors, refer to the descriptions of step 302 in FIG. 3. For a method for configuring the reference coefficient, refer to the descriptions of step 502 in FIG. 5. Details are not described herein again.

(12) The UE sends the SRS, and the network device receives the SRS.

(13) The network device updates a base vector and a coefficient based on the SRS.

For example, the network device may determine the precoding information based on the SRS, update the base vector based on the K reference base vectors, and update the coefficient based on the reference coefficient. For example, the network device may send the update indication information to the UE, and the update indication information may include the first indication information and the second indication information. For a specific manner in which the network device updates the base vector and the coefficient, refer to related descriptions of the first indication information and the second indication information shown above. Details are not described herein again.

For example, the network device may send uplink scheduling information to the UE, where the first indication information or the second indication information may be carried in DCI or a MAC CE. For example, the network device may include the uplink scheduling information and the first indication information (or the second indication information) in the same DCI or MAC CE. The DCI shown in this embodiment of this application may be scrambled by using a configured scheduling radio network temporary identifier (configured scheduling radio network temporary identifier, CS-RNTI), a cell radio network temporary identifier (cell radio network temporary identifier, C-RNTI), another RNTI, or the like. This is not limited in this embodiment of this application.

(14) The UE receives the update indication information.

For example, the UE may restore the precoding information based on the update indication information and the uplink precoding predefined by the network device. Then, the UE generates and sends the signal by using the precoding information. For example, the signal may be carried on a PUSCH.

In this embodiment of this application, the network device indicates update of the base vector or update of the coefficient by indicating an update amount, so that signaling overheads of indicating precoding by the network device to the UE can be effectively reduced, for example, signaling overheads can be effectively reduced.

### Example 2

(21) The network device configures grant free (grant free, GF) transmission for the UE.

For example, when configuring GF transmission for the UE, the network device may configure predefined uplink precoding through RRC signaling. For related descriptions of the predefined uplink precoding, refer to the descriptions of step (11), FIG. 3, FIG. 5, or the like. Details are not described herein again. For example, the UE may be in an RRC connected state (RRC_connected state), for example, an uplink (uplink, UL) configured grant (configured grant) type 1 (type 1) or a UL configured grant type 2 (configured grant type 2). For example, the UE may also be in an RRC inactive state (RRC inactive state), for example, small data transmission (small data transmission).

(22) The network device updates a base vector and a coefficient.

In an example, as shown in (12) and (13), the network device may update the base vector and the coefficient based on the SRS.

In another example, the network device may update the base vector and the coefficient by performing sensing detection (or sensing sounding) on the UE.

(23) The UE receives the update indication information.

For related descriptions of step (23), refer to (14), FIG. 3, FIG. 5, or the like. Details are not described herein again.

For beneficial effects of Example 2, refer to Example 1. Details are not described herein again.

### Example 3

(31) The network device configures predefined uplink precoding.

For related descriptions of step (31), refer to (11), FIG. 3, FIG. 5, or the like. Details are not described herein again.

(32) The network device sends the CSI-RS to the UE, and the UE receives the CSI-RS.

(33) The UE updates a base vector and a coefficient based on the CSI-RS.

For related descriptions of step (33), refer to (13), FIG. 3, FIG. 5, or the like. Details are not described herein again.

(34) The network device receives the update indication information.

For example, the network device may calculate the K base vectors and the coefficients based on the update indication information and the predefined uplink precoding, to learn of downlink precoding (for example, including downlink CSI) fed back by the UE.

In this embodiment of this application, the UE indicates update of the base vector or update of the coefficient by indicating an update amount, so that signaling overheads of feeding back the CSI by the UE are effectively reduced.

The following describes the communication apparatus provided in embodiments of this application.

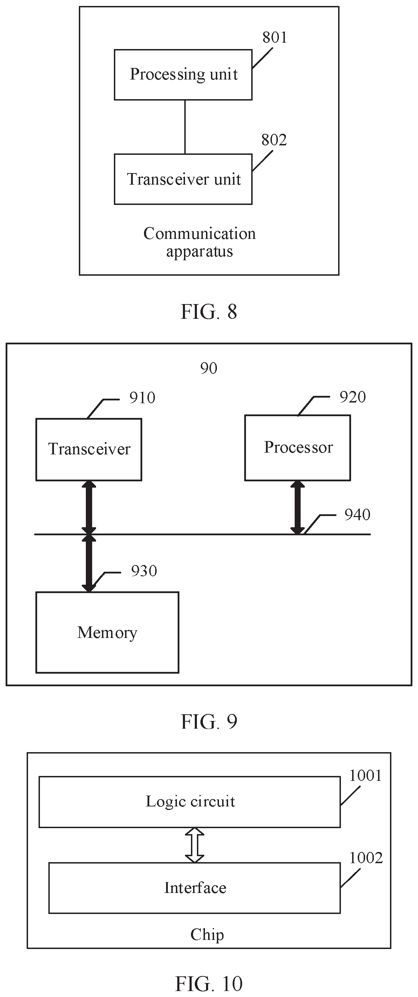

In this application, the communication apparatus is divided into functional modules according to the foregoing method embodiments. For example, each functional module may be divided into each corresponding function, or two or more functions may be integrated into one processing module. The integrated unit may be implemented in a form of hardware, or may be implemented in a form of a software functional module. It should be noted that, in this application, unit division is an example, and is merely logical function division. In actual implementation, another division manner may be used. The following describes in detail the communication apparatus in embodiments of this application with reference to FIG. 8 to FIG. 10.

FIG. 8 is a diagram of a structure of a communication apparatus according to an embodiment of this application. As shown in FIG. 8, the communication apparatus includes a processing unit 801 and a transceiver unit 802. The transceiver unit 802 may implement a corresponding communication function, and the processing unit 801 is configured to implement a corresponding processing function. For example, the transceiver unit 802 may also be referred to as an interface, a communication interface, a communication module, or the like.

In some embodiments of this application, the communication apparatus may be configured to perform an action performed by the first communication apparatus in the foregoing method embodiments. In this case, the first communication apparatus may be a device, or a chip, a functional module, or the like that can be configured in the device. The transceiver unit 802 is configured to perform a sending/receiving-related operation of the first communication apparatus in the foregoing method embodiments. The processing unit 801 is configured to perform a processing-related operation of the first communication apparatus in the foregoing method embodiments.

For example, the processing unit 801 may be configured to determine K base vectors corresponding to precoding information; and the transceiver unit 802 may be configured to send or output first indication information.

For example, the processing unit 801 may be configured to determine coefficients corresponding to precoding information; and the transceiver unit 802 may be configured to send or output second indication information.

For example, the processing unit 801 may be configured to determine a set Sₖ corresponding to a k^{th} reference base vector in K reference base vectors, and determine an index value based on K sets that correspond to the K reference base vectors, and the K base vectors.

Still refer to FIG. 8. In some other embodiments of this application, the communication apparatus may be configured to perform an action performed by a second communication apparatus in the foregoing method embodiments. In this case, the communication apparatus may be a device, or a chip, a functional module, or the like that can be configured in the device. The transceiver unit 802 is configured to perform a sending/receiving-related operation of the second communication apparatus in the foregoing method embodiments. The processing unit 801 is configured to perform a processing-related operation of the second communication apparatus in the foregoing method embodiments.

For example, the transceiver unit 802 may be configured to receive or input first indication information; and the processing unit 801 may be configured to determine K base vectors based on the first indication information and K reference base vectors.

For example, the transceiver unit 802 may be configured to receive or input second indication information; and the processing unit 801 may be configured to determine a coefficient based on the second indication information and a reference coefficient.

For example, the processing unit 801 may be configured to determine a set Sₖ corresponding to a k^{th} reference base vector in the K reference base vectors, and determine the K base vectors based on K sets that correspond to the K reference base vectors, and an index value.

Optionally, in the foregoing embodiments, the communication apparatus may further include a storage unit. The storage unit may be configured to store instructions and/or data. The processing unit 801 may read the instructions and/or the data in the storage unit, so that the communication apparatus implements the foregoing method embodiments. For example, the storage unit may further store the K reference base vectors or the reference coefficient.

In the foregoing embodiments, for specific descriptions of terms or steps such as the first indication information, the second indication information, the K reference base vectors, the K base vectors, the index value, the coefficient, and the reference coefficient, refer to the descriptions in the foregoing method embodiments. Details are not described herein again.

Specific descriptions of the transceiver unit and the processing unit described in the foregoing embodiments are merely examples. For specific functions, steps, or the like of the transceiver unit and the processing unit, refer to the foregoing method embodiments. Details are not described herein again.

The foregoing describes the communication apparatus in embodiments of this application. The following describes a possible product form of the communication apparatus. Any form of product that has a function of the communication apparatus described in FIG. 8 falls within the protection scope of embodiments of this application. The following descriptions are merely examples, and a product form of the communication apparatus in embodiments of this application is not limited thereto.

In a possible implementation, in the communication apparatus shown in FIG. 8, the processing unit 801 may be one or more processors, and the transceiver unit 802 may be a transceiver, or the transceiver unit 802 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A manner of a connection between the processor and the transceiver is not limited in embodiments of this application. In a process of performing the foregoing method, a process of sending information in the foregoing method may be a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be a process of receiving the information input by the processor. When the processor receives the input information, the transceiver receives the information, and inputs the information into the processor. Further, after the transceiver receives the information, other processing may need to be performed on the information before processed information is input into the processor.

As shown in FIG. 9, the communication apparatus 90 includes one or more processors 920 and a transceiver 910.

In some embodiments of this application, the communication apparatus may be configured to perform steps, methods, or functions performed by the first communication apparatus or a network management server. For example, the processor 920 may be configured to perform functions or steps implemented by the processing unit 801 shown in FIG. 8, and the transceiver 910 may be configured to perform functions or steps implemented by the transceiver unit 802 shown in FIG. 8. For specific descriptions of the processor 920 and the transceiver 910, refer to FIG. 8 or the method embodiment shown in the foregoing descriptions. Details are not described herein again.

In some other embodiments of this application, the communication apparatus is configured to perform the steps, the methods, or the functions performed by the second communication apparatus or the terminal device. For example, the processor 920 may be configured to perform the functions or the steps implemented by the processing unit 801 shown in FIG. 8, and the transceiver 910 may be configured to perform the functions or the steps implemented by the transceiver unit 802 shown in FIG. 8. For specific descriptions of the processor 920 and the transceiver 910, refer to FIG. 8 or the method embodiment shown in the foregoing descriptions. Details are not described herein again.

In each implementation of the communication apparatus shown in FIG. 9, the transceiver may include a receiver and a transmitter. The receiver is configured to perform a receiving function (or operation), and the transmitter is configured to perform a transmitting function (or operation). In addition, the transceiver is configured to communicate with another device/apparatus via a transmission medium.

Optionally, the communication apparatus 90 may further include one or more memories 930, configured to store program instructions and/or data. The memory 930 is coupled to the processor 920. The coupling in embodiments of this application may be an indirect coupling or a communication connection between communication apparatuses, units, or modules in an electrical form, a mechanical form, or another form, and is used for information exchange between the communication apparatuses, the units, or the modules. The processor 920 may operate in collaboration with the memory 930. The processor 920 may execute the program instructions stored in the memory 930. Optionally, at least one of the one or more memories may be included in the processor.

In this embodiment of this application, a specific connection medium among the transceiver 910, the processor 920 and the memory 930 is not limited. In this embodiment of this application, in FIG. 9, the memory 930, the processor 920, and the transceiver 910 are connected to each other through a bus 940. The bus is represented by using a thick line in FIG. 9. A manner of connection between other components is only schematically described, but is not used as a limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 920 is mainly configured to process a communication protocol and communication data, control the entire communication apparatus, execute a software program, and process data of the software program. The memory 930 is mainly configured to store the software program and the data. The transceiver 910 may include a control circuit and an antenna. The control circuit is mainly configured to convert a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 920 may read the software program from the memory 930, interpret and execute instructions of the software program, and process data of the software program. When data needs to be sent in a wireless manner, the processor 920 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 920. The processor 920 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may further have more components than those in FIG. 9, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 8, the processing unit 801 may be one or more logic circuits, and the transceiver unit 802 may be an input/output interface, or may be referred to as a communication interface, an interface circuit, an interface, or the like. Alternatively, the transceiver unit 802 may be a sending unit and a receiving unit. The sending unit may be an output interface, and the receiving unit may be an input interface. The sending unit and the receiving unit are integrated into one unit, for example, an input/output interface. As shown in FIG. 10, a communication apparatus shown in FIG. 10 includes a logic circuit 1001 and an interface 1002. That is, the processing unit 801 may be implemented by using the logic circuit 1001, and the transceiver unit 802 may be implemented by using the interface 1002. The logic circuit 1001 may be a chip, a processing circuit, an integrated circuit, a system-on-chip (system-on-chip, SoC), or the like. The interface 1002 may be a communication interface, an input/output interface, a pin, or the like. For example, FIG. 10 shows an example in which the communication apparatus is a chip. The chip includes a logic circuit 1001 and an interface 1002.

In this embodiment of this application, the logic circuit and the interface may be coupled to each other. A specific manner of connection between the logic circuit and the interface is not limited in this embodiment of this application. For example, the logic circuit 1001 may be configured to perform functions or steps implemented by the processing unit 801 shown in FIG. 8, and the interface 1002 may be configured to perform functions or steps implemented by the transceiver unit 802 shown in FIG. 8. For specific descriptions of the logic circuit 1001 and the interface 1002, refer to FIG. 8 or the foregoing method embodiment. Details are not described herein again.

The communication apparatus shown in embodiments of this application may implement the methods provided in embodiments of this application in a form of hardware, or may implement the methods provided in embodiments of this application in a form of software. This is not limited in embodiments of this application.

An embodiment of this application further provides a communication system. The communication system includes a first communication apparatus and a second communication apparatus. The first communication apparatus and the second communication apparatus may be configured to perform the method in any one of the foregoing embodiments.

In addition, this application further provides a computer program, and the computer program is used to implement operations and/or processing performed by the communication apparatus in the method provided in this application.

This application further provides a computer-readable storage medium. The computer-readable storage medium stores computer code. When the computer code is run on a computer, the computer is enabled to perform operations and/or processing performed by communication apparatuses in the method provided in this application.

This application further provides a computer program product. The computer program product includes computer code or a computer program. When the computer code or the computer program is run on a computer, operations and/or processing performed in the method provided in this application are/is performed.

In the several embodiments provided in this application, it should be understood that the disclosed system, communication apparatus, and method may be implemented in other manners. For example, the described communication apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the communication apparatuses or units, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effect of the solutions provided in embodiments of this application.

In addition, functional modules in embodiments of this application may be integrated into one processing unit, or each of the modules may exist alone physically, or two or more modules are integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining K base vectors corresponding to precoding information, wherein K is a positive integer; and
sending first indication information, wherein the first indication information indicates an update amount of an index value corresponding to the K base vectors relative to an index value corresponding to K reference base vectors.

2. The method according to claim 1, wherein the index value corresponding to the K base vectors is an index value of each of the K base vectors, the K reference base vectors are an index value of each of the K reference base vectors, and the update amount comprises an update amount of the index value of each of the K base vectors relative to an index value of a corresponding reference base vector.

3. The method according to claim 2, wherein
the first indication information comprises the update amount of the index value of each of the K base vectors relative to the index value of the corresponding reference base vector; or
the first indication information comprises an index value of an update amount group, and the update amount group is determined by using K update amounts.

4. The method according to any one of claims 1 to 3, wherein the K base vectors are different from each other.

5. The method according to claim 3 or 4, wherein a first update amount group corresponds to K first base vectors, a second update amount group corresponds to K second base vectors, and the K first base vectors and the K second base vectors are different in at least one base vector, wherein the K base vectors are the K first base vectors or the K second base vectors, and the update amount group is the first update amount group or the second update amount group.

6. The method according to claim 1, wherein the index value corresponding to the K base vectors is an index value of a base vector group to which the K base vectors belong, the index value corresponding to the K reference base vectors is an index value of a base vector group to which the K reference base vectors belong, and the update amount comprises an update amount of the index value of the base vector group to which the K base vectors belong relative to the index value of the base vector group to which the K reference base vectors belong.

7. The method according to any one of claims 1 to 6, wherein the K base vectors are comprised in any one of the following sets: a space domain base vector set, a frequency domain base vector set, or a time domain base vector set.

8. The method according to any one of claims 1 to 7, wherein the method further comprises:
sending second indication information, wherein the second indication information indicates an index value corresponding to an update coefficient, and the update coefficient is a coefficient, among coefficients corresponding to the precoding information, that has been updated relative to a reference coefficient.

9. The method according to claim 8, wherein the second indication information comprises value indication information, and the value indication information indicates an update amount of the index value corresponding to the update coefficient relative to an index value corresponding to the reference coefficient.

10. The method according to claim 9, wherein a value range, of the index value corresponding to the update coefficient, indicated by the value indication information is determined by using the index value corresponding to the reference coefficient.

11. The method according to any one of claims 8 to 10, wherein the second indication information comprises location indication information, and the location indication information indicates a location of the update coefficient in the coefficients.

12. The method according to any one of claims 8 to 11, wherein the update coefficient comprises a variable zero coefficient or a variable non-zero coefficient.

13. A communication method, wherein the method comprises:
determining coefficients corresponding to precoding information; and
sending second indication information, wherein the second indication information indicates an index value corresponding to an update coefficient, and the update coefficient is a coefficient, among the coefficients, that has been updated relative to a reference coefficient.

14. The method according to claim 13, wherein the second indication information comprises value indication information, and the value indication information indicates an update amount of the index value corresponding to the update coefficient relative to an index value corresponding to the reference coefficient.

15. The method according to claim 14, wherein a value range, of the index value corresponding to the update coefficient, indicated by the value indication information is determined by using the index value corresponding to the reference coefficient.

16. The method according to any one of claims 13 to 15, wherein the second indication information comprises location indication information, and the location indication information indicates a location of the update coefficient in the coefficients.

17. The method according to any one of claims 13 to 16, wherein the update coefficient comprises a variable zero coefficient or a variable non-zero coefficient.

18. A communication method, wherein the method comprises:
determining K base vectors corresponding to precoding information, wherein K is a positive integer; and
sending first indication information, wherein the first indication information indicates an index value, and the index value is determined based on the K base vectors and K reference base vectors.

19. The method according to claim 18, wherein the method further comprises:
determining a set Sₖ corresponding to a k^{th} reference base vector in the K reference base vectors, wherein the set Sₖ represents a value range of an index value of a k^{th} base vector corresponding to the k^{th} reference base vector, the index value of the k^{th} base vector is comprised in the set Sₖ, and k=0, 1, ..., K-1; and
determining the index value based on K sets that correspond to the K reference base vectors, and the K base vectors.

20. A communication method, wherein the method comprises:
receiving first indication information, wherein the first indication information indicates an update amount of an index value corresponding to K base vectors relative to an index value corresponding to K reference base vectors; and
determining the K base vectors based on the first indication information and the K reference base vectors.

21. The method according to claim 20, wherein the index value corresponding to the K base vectors is an index value of each of the K base vectors, the K reference base vectors are an index value of each of the K reference base vectors, and the update amount comprises an update amount of the index value of each of the K base vectors relative to an index value of a corresponding reference base vector.

22. The method according to claim 21, wherein
the first indication information comprises the update amount of the index value of each of the K base vectors relative to the index value of the corresponding reference base vector; or
the first indication information comprises an index value of an update amount group, and the update amount group is determined by using K update amounts.

23. The method according to any one of claims 20 to 22, wherein the K base vectors are different from each other.

24. The method according to claim 22 or 23, wherein a first update amount group corresponds to K first base vectors, a second update amount group corresponds to K second base vectors, and the K first base vectors and the K second base vectors are different in at least one base vector, wherein the K base vectors are the K first base vectors or the K second base vectors, and the update amount group is the first update amount group or the second update amount group.

25. The method according to claim 20, wherein the index value corresponding to the K base vectors is an index value of a base vector group to which the K base vectors belong, the index value corresponding to the K reference base vectors is an index value of a base vector group to which the K reference base vectors belong, and the update amount comprises an update amount of the index value of the base vector group to which the K base vectors belong relative to the index value of the base vector group to which the K reference base vectors belong.

26. The method according to any one of claims 20 to 25, wherein the K base vectors are comprised in any one of the following sets: a space domain base vector set, a frequency domain base vector set, or a time domain base vector set.

27. The method according to any one of claims 20 to 26, wherein the method further comprises:
receiving second indication information, wherein the second indication information indicates an index value corresponding to an update coefficient, and the update coefficient is a coefficient, among coefficients corresponding to the precoding information, that has been updated relative to a reference coefficient.

28. The method according to claim 27, wherein the second indication information comprises value indication information, and the value indication information indicates an update amount of the index value corresponding to the update coefficient relative to an index value corresponding to the reference coefficient.

29. The method according to claim 28, wherein a value range, of the index value corresponding to the update coefficient, indicated by the value indication information is determined by using the index value corresponding to the reference coefficient.

30. The method according to any one of claims 27 to 29, wherein the second indication information comprises location indication information, and the location indication information indicates a location of the update coefficient in the coefficients.

31. The method according to any one of claims 27 to 30, wherein the update coefficient comprises a variable zero coefficient or a variable non-zero coefficient.

32. A communication method, wherein the method comprises:
receiving second indication information, wherein the second indication information indicates an index value corresponding to an update coefficient, and the update coefficient is a coefficient, among coefficients corresponding to precoding information, that has been updated relative to a reference coefficient; and
determining the coefficients based on the second indication information and the reference coefficient.

33. The method according to claim 32, wherein the second indication information comprises value indication information, and the value indication information indicates an update amount of the index value corresponding to the update coefficient relative to an index value corresponding to the reference coefficient.

34. The method according to claim 33, wherein a value range, of the index value corresponding to the update coefficient, indicated by the value indication information is determined by using the index value corresponding to the reference coefficient.

35. The method according to any one of claims 32 to 34, wherein the second indication information comprises location indication information, and the location indication information indicates a location of the update coefficient in the coefficients.

36. The method according to any one of claims 32 to 35, wherein the update coefficient comprises a variable zero coefficient or a variable non-zero coefficient.

37. A communication method, wherein the method comprises:
receiving first indication information, wherein the first indication information indicates an index value, and the index value is determined based on K base vectors and K reference base vectors; and
determining the K base vectors based on the first indication information and the K reference base vectors.

38. The method according to claim 37, wherein the determining the K base vectors based on the first indication information and the K reference base vectors comprises:
determining a set Sₖ corresponding to a k^{th} reference base vector in the K reference base vectors, wherein the set Sₖ represents a value range of an index value of a k^{th} base vector corresponding to the k^{th} reference base vector, the index value of the k^{th} base vector is comprised in the set Sₖ, and k=0, 1, ..., K-1; and
determining the K base vectors based on K sets that correspond to the K reference base vectors, and the index value.

39. A communication apparatus, comprising a unit configured to perform the method according to any one of claims 1 to 38.

40. A communication apparatus, comprising a processor, wherein the processor is configured to perform the method according to any one of claims 1 to 38.

41. A communication apparatus, comprising a logic circuit and an interface, wherein the logic circuit is coupled to the interface; and
the interface is configured to input and/or output information, and the logic circuit is configured to perform the method according to any one of claims 1 to 38.

42. A computer-readable storage medium, wherein the computer-readable storage medium is configured to store a computer program; and when the computer program is executed, the method according to any one of claims 1 to 38 is performed.

43. A computer program product, wherein when the computer program product is executed, the method according to any one of claims 1 to 38 is performed.

44. A communication system, wherein the communication system comprises a first communication apparatus and a second communication apparatus, the first communication apparatus is configured to perform the method according to any one of claims 1 to 19, and the second communication apparatus is configured to perform the method according to any one of claims 20 to 38.
